Europäisches Patentamt

European Patent Office

Office européen des brevets

(11) Publication number : **0 514 231 A2**

(12) # EUROPEAN PATENT APPLICATION

(21) Application number : **92401117.4**

(22) Date of filing : **21.04.92**

(51) Int. Cl.⁵ : **G06F 15/21**

(30) Priority : **10.05.91 US 698501**

(43) Date of publication of application :
**19.11.92 Bulletin 92/47**

(84) Designated Contracting States :
**BE DE DK ES FR GB GR IT LU NL PT**

(71) Applicant : **INTELLINOMICS CORPORATION
1200 Gough Street
San Fransisco, CA 94109 (US)**

(72) Inventor : **Long, Jeffrey G.
37 Bret Harte Terrace
San Francisco, CA 94133 (US)**
Inventor : **Fearing, Robert M.
8 Midway
San Francisco, CA 94133 (US)**

(74) Representative : **Rodhain, Claude
Cabinet Claude Rodhain 30, rue la Boétie
F-75008 Paris (FR)**

(54) **Work management computer system.**

(57) A system for aiding the management and operation of an organization providing a facility whereby work protocol rules may be encoded into a data structure and a facility whereby explicit work requests cause automatic generation of implicit work requests using data stored in a data structure.

EP 0 514 231 A2

Jouve, 18, rue Saint-Denis, 75001 PARIS

## BACKGROUND OF THE INVENTION

The invention pertains to the field of work management systems. In particular, the invention pertains to computer based systems to aid in the management and operation of any organization by use of various rules which define how the organization ought to behave in reacting to various complex stimuli such as are represented by customer orders, inventory status changes, and manufacturing orders. These rules are defined by executives of the organization and are stored as data for ease of alteration.

Software developers have been trying since the commercial electronic computer was introduced in 1951 to make computers reliably support organization work processes in all areas of organizational effort, including finance, sales, distribution, manufacturing, personnel, purchasing, etc.

The complexity of work processes, their constant changeability, and the superficial methods of analysis that have been applied to understand those processes have all resulted in systems that, while partly successful, are technically complex, expensive and time-consuming to create and maintain, and technically difficult (in some cases essentially impossible) to change.

In addition, the resulting software has not really facilitated its users in managing their work processes; executives often feel hindered rather than liberated by their computer systems. Software is often viewed as an impediment, a gigantic source of corporate inertia and inefficiency that prevents organizations from being able to quickly respond to marketplace demands. It is not unusual for large organizations today to maintain 10-50 million lines of code, at a direct cost to them, for software alone, of 1% or more of their total revenue. This situation has been caused by an inadequate analysis of work management.

Much of the problem with current organization management systems is that the designers have failed to understand that "work generation and management" is the common denominator of all organizational activities including (but not limited to) order entry, manufacturing, purchasing, recruitment, and finance. They have been unable to define and encapsulate the rules and the rule-management process underlying those various activities such that the actual work being managed can be defined as data records and managed with a small and relatively simple set of software programs.

As a result current organization management systems are extremely complex with many interlinked programs. They typically embody the rules by which the organization operates in the program code itself, and each group of programs is designed to support only one area or subarea of organizational activity. When the executives managing the organization wish to change the rules that define how the organization behaves, the programs themselves must therefore be changed. This is an expensive, time consuming process.

Another problem with current organization management systems is that they deal only with explicit requests and do not recognize that each explicit request for a organization to do something usually carries with it a number of implicit requests or actions necessitated by the explicit request.

Further, whenever an explicit request is made for the organization to do something, the workers often need to know other things before or as they do the work required by the explicit request. There is a need therefore for a system wherein workers who are carrying out the work that is implicit in an explicit request can have access to other information which they need to know to do the work.

Finally, in every business organization there are business managers or executives who manage the organization and continually evaluate the performance of the organization and the way in which the organization is acting and/or reacting. They require a mechanism whereby they can obtain, in a timely and flexible manner, statistical and other data on the performance of the organization. Having analyzed the results of past performance, there then should also be a mechanism whereby executives can easily change the work protocol rules which define how the work of the organization is carried out and have those new rules immediately put into place in the computer system without extensive delays and expense to reprogram the system.

There are a large number of software packages and approaches that perform some of these functions; these are different than the invention in the ways noted below.

## PERT/CPM Systems

PERT/CPM Systems provide a way to sequence explicit work steps, and to compute various dates and resource loadings. They provide no mechanism whereby a single explicit work step may generate other necessary implicit work steps, they provide no notification to workers of what the steps are, they provide no decision support for the workers who are to carry out the required work steps, they have no formal completion-recording process, and they do not automatically collect summary performance statistics for executive analysis.

## Parameterized Application Software Packages

Parameterized Application Software Packages may provide support in many areas including order fulfillment, billing, manufacturing, etc. Such systems provide no generalized mechanism whereby a single explicit work order may generate other necessary implicit work orders; such work is largely done "outside the system", where, for example, the order desk decides whether special pricing or messages apply. While some options are available via data "parameters", these are very limited and provide no mechanism whereby complex, multi-factored rules regarding organizational behavior are generalizable in an unlimited variety of ways. As a result, organizations using such packages must either (a) change their work processes to fit the options provided by the package, or (b) invest enormous time, effort and money in changing the software in the package to support the organization's existing work processes. When organizations build their own software inhouse they face the same problem because while they can always support current work processes, given enough time and money, they still cannot anticipate future work processes and as a result they spend most of their budget modifying existing software to meet new requirements. This leads to many errors, much extra effort by the staff managing the process, and a great deal of lost time whenever work processes change for any reason.

## Electronic Mail Systems

Electronic Mail Systems provide a way to enter free-form communications and to assign these to the proper receiving party. They provide no mechanism whereby a single explicit work request may trigger other necessary implicit work orders and they provide no generalized decision support for the workers who are to carry out the required work steps.

## Paper/Telephone Systems

Paper/Telephone Systems provide a way to enter free-form communications and to source these to the proper receiving party. They provide no mechanism whereby a single explicit work step may generate other necessary implicit work steps and they provide no generalized decision support for the workers who are to carry out the required work steps.

## Work Documentation Systems

Work Documentation Systems provide a way to document workflow within an organization. Examples of such systems are flowcharts, data flow diagrams, and entity-relationship diagrams. These systems are strictly descriptive and passive, i.e. they provide no mechanism to ensure that work really does flow as documented. Further, they provide no mechanism whereby a single explicit work step may generate other necessary implicit work steps and they provide no generalized decision support for the workers who are to carry out the required work steps.

## AI Production Systems

AI Production Systems provide a way to define a set of "condition-action rules" that may be "fired", depending on the "context". Production systems run in cycles, where each rule that is fired modifies the context, so that the next cycle of the system may fire a different rule than the last cycle. These systems take the stimuli in seriatim order, and do not generalize it; further they are not designed in such a general way that almost all the logic of decision-making is represented as data rules; as a result they mimic, as they were intended to do, the human cognitive processes associated with diagnostic or exploratory-type activities, rather than a flexible, user-changeable way to analyze complex stimuli in parallel, after various complex classificatory transformations, to generate complex predefined responses.

## SUMMARY OF THE INVENTION:

The teachings of the invention are at least in part embodied in software appended hereto in the Appendices and will sometimes hereafter be referred to as the "Ultra-Structure CORE", the "CORE" or the "system". "CORE" is an acronym for "Corporate Operating Rule Executor". The CORE software appended hereto embodies the preferred embodiment and the best known mode of practicing the teachings of the invention at this time.

The main objective of this invention is to allow an organization to define all work that it performs as a series of "work transactions", along with the desired sequence for executing that work, such that the work can reliably be managed by a computer even when the rules governing the creation, assignment, etc. of the work are very complex and changeable. These work processes are "prescriptive", meaning they are actively used to manage the organization's behavior, rather than merely being "descriptive", i.e. merely documenting what occurs in a specific situation. A key objective is to permit organizations to define almost any logically possible manner of doing work, by representing the manner of doing work not as software but as data that is easily changeable within a data structure.

This main objective is achieved at least in part by defining work protocol rules as data in a data strucuture. The work protocol rules are a collection of data records which have selection fields the contents of which define a "key" and which have other data fields the contents of which define "implicit work" that must be done if the conditions in the key are met. Stimuli in the form of "explicit work requests" are processed by using a "meta-protocol" to extract, i.e., filter and select, the applicable implicit work requests based upon the exact status of the data fields in the explicit work request, the contents of filter data fields in the meta-protocol, and, sometimes, depending upon whether the filter fields of the meta-protocol contain network attributes, the exact contents of the appropriate network data structures which group entities into classes.

The meta-protocol is a collection of data records that define codes that are used to form keys. These codes are defined by management based upon the way management wishes the organization to respond to certain stimuli, and are used with the contents of certain data fields in the explicit work order to form keys by which certain records in the work protocol data are selected. The meta-protocol records also define the order in which the data records from the work protocol data structure are filtered.

An important concept involved in the filtering process carried out by the meta-protocol is the use of networks. Networks are data structures whose contents may be defined by management. Networks permit managers to group entities such as customers or products into any number of classes, such that any entity or class can have any number of parents or children. The careful use of networks permits managers to define far fewer, and therefore far more manageable, work protocol rules because a rule may then be set up to be invoked not just on a case-by-case, entity-by-entity basis but instead based on arbitrarily rich class or classes of entities (e.g. customers, products, locations, time periods).

This use of classes to trigger responses to stimuli is defined and controlled at least in part by a "meta-protocol". Some meta-protocol data records may have network "attribute" codes such as product types which are used along with the contents of the explicit work order to filter records from the work protocol rules data structure. This is done by concatenating the contents of the pertinent field of the explicit work order with the network attribute field to form a key with which to access the network data structure. For example if the explicit work order dealt with product X which was classified in a product network as "type" Y and if a meta-protocol record had a "type" code in it, the product network data structure would be accessed utilizing a key which included product X and the attribute code "type". The product network would have a record that matched this key and identifed product X as type Y. The meta-protocol would then use type Y as part of the key subsequently formed to filter data records from the work protocol rules data structure.

This extraction process using the meta-protocol and the networks results in an unsequenced collection of implicit work requests called a "work transaction". Each implicit work order in the work transaction is essentially the collection of data fields defining the implicit work to be done stated in each selected record of the work protocol rules. The selected work protocol records are those records whose keys matched the keys assembled by the meta-protocol with the aid of the various network data structures and the contents of the data fields of the explicit work order(s).

The collection of implicit work orders in the work transaction are then screened for duplicates in a process called "collision detection". The collision detection process detects duplicate implicit work orders generated from a single explicit work and removes the duplicates.

When a number of explicit work orders are placed at one time (an "order"), and the implicit work orders are then generated for each explicit work order, some of the implicit work orders (e.g. credit checks or carrier assignment) need only be performed once for the entire order. The determination of which implicit work orders can be grouped and executed once for the entire order is called "compression". The compression process looks for duplicate implicit work orders across a plurality of explicit work orders. Duplicate implicit work orders which may be performed once across a plurality of work orders (e.g. credit checks), are defined as compressible by consultation with a data structure [I01E] defined by management which defines for the activity of all possible implicit work orders whether that type of activity is or is not compressible. Duplicate implicit work orders that are not compressible across a plurality of line items such as different products are marked as not compressible meaning that they needed to be performed once in the protocol each time they occur. The duplicate implicit work orders in the protocol that are compressible are then moved to the top of the protocol such that they are performed only once and the duplicate implicit work orders are removed. A sequencer then sequences the remaining implicit work orders into the proper order to accomplish the desired work by consulting a data structure [I53E] which stated the proper sequence of work activities and which is defined by management.

The second objective is to provide assigned workers with on-line decision-support, which means that activities and decisions they must make for their particular job function are facilitated by the rules that are defined in the system. These rules may be very simple or quite complex. Towards this end, the invention has defined a number of different "workstations". The preferred embodiment of the teachings of the invention is implemented in the form of a program collection which manages the work of an organization that distributes a product stored in inventory bins. The workstations in the current preferred embodiment support the warehouse receiving, warehouse picking, traffic, billing, cash receipts, shipping, credit, and purchasing functions in an organization such as a food product distribution company. The teachings of the invention are of course applicable to any type of organization.

The decision support objective is achieved through the use of decision screens for each workstation type and verbs defined for each screen. Each verb, when invoked allows the user access to additional information needed to perform the work defined by implicit work orders listed on the decision screen.

The third objective of the invention is to permit organizations to accumulate the results of the work they manage and provide a wide range of "corporate metrics", such that executives can then decide whether to change their work processes and associated rules. Metrics supported in the preferred embodiment include allocation rules for top-down cost accounting for "what if" analysis of revenues and costs (both direct and overhead costs) by customer, customer type, product, product type, time period, location, contract, and contract type. The teachings of the invention contemplate as many different allocation rules and metrics as needed to accurately measure the performance of the organization.

The allocation rules contemplate specific rules recorded in data structure for allocation of various quantities (revenue, expenses or units) such as the president's salary in various ways to see the effects on company performance when evaluated in various ways. The results of the allocations can be displayed on a screen for analysis, wherein an executive can select certain "scenarios" of both actual and allocated quantitative information for inclusion in calculations. The calculations are presented as a matrix with quantities such as revenues, costs, units and orders in columns across the top and an unlimited number of scenario results in rows on each line. That is, each line of the matrix represents one scenario which may represent one or more allocation rules for some number or numbers such as overhead costs, additional revenues, or any other numbers. When a particular scenario line is "tagged", its numbers are added into the summary numbers displayed above the top line of the matrix.

There is also a filter condition facility whereby the data used as the basis of the allocations is limited to only that data that meets the specified selection conditions. When a filter is set, only the records satisfying that condition or conditions will be used to determine the baseline quantity used for that particular allocation. Thus, for example, a filter condition may specify that a certain allocation rule should allocate $100,000 in expenses only to sales made from California-based stores rather than to all stores.

There are three phases of calculations done in scenario analysis. The first phase is the summing of the "actual" data from completed implicit work orders to arrive at the initial quantities listed across the top of the matrix (i.e. actual direct revenue, expense, number of units, and number of orders).

The second phase is execution of the defined allocation rules wherein any quantity to be allocated (the numerator) is divided by a defined denominator based upon the "actual" data. As an example, an allocation rule might state that a numerator of $100,000 is to be allocated as an expense and but is to be allocated based on revenues under a scenario ID of "EXEC"; if the revenues of records that meet the filter criteria total $1,000,000, then the amount of expense in this defined "scenario" will be $0.10 for each dollar of revenue. Records will then be generated defining, for each record that meets the filter criteria, what its share of the allocated expenses is. This record will be marked with the scenario ID defined in the allocation rule so it can be treated separately in the next phase.

The third phase is the executive analysis. This calculation involves summation of the actual data plus certain other scenarios that have been "tagged" by the user so as to generate an updated row of summary data for the two dimensional matrix of the executive analysis screen. The executive analysis calculation also updates the summary numbers displayed above the matrix. These summary numbers include the totals for each column of the matrix only for scenario rows that are turned on ("tagged") plus some additional calculations such as gross profit margin or other numbers which reflect certain ratios or other relationships between the column totals for the scenario rows that are turned on.

The fourth objective of the invention is to enable organizations to modify their work processes and associated rules "instantly" without having to extensively redesign the supporting information systems.

BRIEF DESCRIPTION OF THE DRAWINGS:

Figure 1 is a block diagram of the preferred environment in which the teachings of the invention are practiced.

Figure 2 is a flow chart indicating how the invention is used.

Figure 3 is a diagram of the data structure used to encode a typical rule.

Figure 4 is a flowchart of the process of generating implicit work orders from explicit work orders.

Figure 5 is a diagram of the workstation types supported in the current embodiment.

Figure 6 is a flow chart of the decision support process.

Figure 7 is diagram of the executive analysis screen showing the scenario matrix.

Figure 8 is a diagram of the filter conditions that may be used to filter "actuals" data.

Figure 9 is a diagram of a screen used to encode the allocation rules desired by management into a data structure.

Figure 10 is a diagram of a screen used to encode the work protocol rules desired by management into a data structure.

Figure 11 is a diagram of a screen used to encode sequencing rules defining the order in which work is to be done into a data structure.

Figures 12A through 12H illustrate the data structures of the meta-protocol Z00E block, several network data structures, the data structure of the Work Protocol Rules Block I45E and a data structure representing a resulting protocol generated using the hypothetical contents of the data structures shown in Figures 12A-12H.

## DESCRIPTION OF CERTAIN KEY CONCEPTS

The teachings of the invention are built around certain key concepts:

- o work orders
- o work protocols
- o workstations
- o decision support
- o executive analysis.

Work orders authorize, assign, and track the completion of work within an organization. There are two types of work order: "explicit" work orders generated by an authorized requester, and "implicit" work orders that define work that is implicit within the explicit request. Groups of explicit orders that are generated by an authorized requester at one time are referred to as an "order".

Work protocols define all the implicit work that may be triggered by an explicit work order. These related implicit work orders are work orders which may be automatically generated by the system upon receipt of some initiating explicit work order. For example, an explicit work order which represents the purchase of a product by a customer may generate via the work protocol additional implicit work orders for credit checks, inventory picks, shipment scheduling, billing, and follow-up. With work protocols, an organization can define all critical success factors necessary for all parties to have a satisfactory and completed work transaction in the form of data stored in a data structure which data content may be easily changed.

Workstations are facilities whereby work is done; they can be people, institutions, or machines. These can be internal facilities (e.g. employees) or external facilities (e.g. outside vendors).

Decision support has to do with not only telling someone at a workstation what the work is that they must do, but also providing support for the completion of the work. This involves provision of specialized code that can be invoked by "verbs", i.e., commands. When these verbs are issued from a decision screen, the system provides access for the user to other data stored on the system that the user needs to know to accomplish the work ordered by the implicit work requests. The goal is to assist users to improve the quality as well as the quantity of work they complete by having the system (a) propose disposition of certain work, and/or (b) provide data for human decision-making.

Executive analysis has to do with (a) examining the results of work, (b) deciding whether to change how the work is done (i.e. the work process, including pricing, work steps, work assignment, customer classifications, product classifications, etc), and (c) actually changing work protocol data, or other data that defines the rules of behavior for the organization, based upon the past experience. The data-driven nature of the rules, i.e., the fact that the rules are recorded as data in a data structure as opposed to being embedded in the code of the software, permits an organization to rapidly change its behavior without the need to rewrite significant portions of the software.

## DETAILED DESCRIPTION OF THE PREFERRED EMBODIMENT

In the preferred embodiment, the teachings of the invention are embodied in 30 object-oriented computer programs and their associated 30 data structures, plus 10 stand-alone "Workstation" programs, which collectively are called the Corporate Operating Rule Executor ("CORE"). The current preferred embodiment of the Ultra-Structure CORE requires only about 32,000 lines of 'C' code, a very small amount of code using very few data structures for the functionality provided.

The teachings of the invention may be embodied in many different computer languages and running in many different operating system environments on many different platforms. These programs can run on any computer that runs the "Ultra-Structure Workbench", another product of the assignee of this invention which is included herewith as one of the Appendices in source code form. The program code of the Ultra-Structure CORE is 'C' language source code, which is portable, but it has embedded in it Workbench commands that are specific to the Ultra-Structure Workbench program collection also submitted herewith. Therefore, the Ultra-Structure CORE application program collection in the Appendices will not run without the Ultra-Structure Workbench program collection also submitted herewith as a source code appendix. The version of the source code of the Workbench submitted herewith is designed to run on Hewlett-Packard 3000 series computers running the following version of the MPE/XL operating system, the IMAGE database, and the Omnidex Indexed File Manager:

- o operating system: H-P 3000 Release A.31.00, User Version A.31.00, MPE XL HP31900 A.24.04
- o 'C' compiler: H-P C/XL HP31506A.01.22
- o Linker: H-P LINK EDITOR/XL HP30315A.02.22
- o Omnidex Indexed File Manager: Version 2.06.00.

Thus the operating system calls in the Workbench source code are for the MPE/XL operating system. But the Workbench code has also been "ported" to run on Digital Equipment Corporation (DEC) VAX computers with the VMS operating system, UNIX System V computers, and any DOS based IBM-compatible personal computer running standalone or in a local area network. The platform computer must have at least a 10 megabyte hard disk. With the source code submitted in an appendix hereto, the Workbench could be ported with relatively little effort by anyone skilled in the art of 'C' programming to any modern computer environment. The approximately 20,000 lines of 'C' code constitute a very small system and the portions of the Workbench that are likely to vary in different computing environments have been grouped into separate functions, leaving the bulk of the code unchanged for most ported implementations.

The Ultra-Structure CORE source code submitted herewith is designed to run in any environment supported by the Workbench software, although when running on a personal computer the code files must be broken into smaller pieces so they may be compiled within the limitations of the personal computer memory.

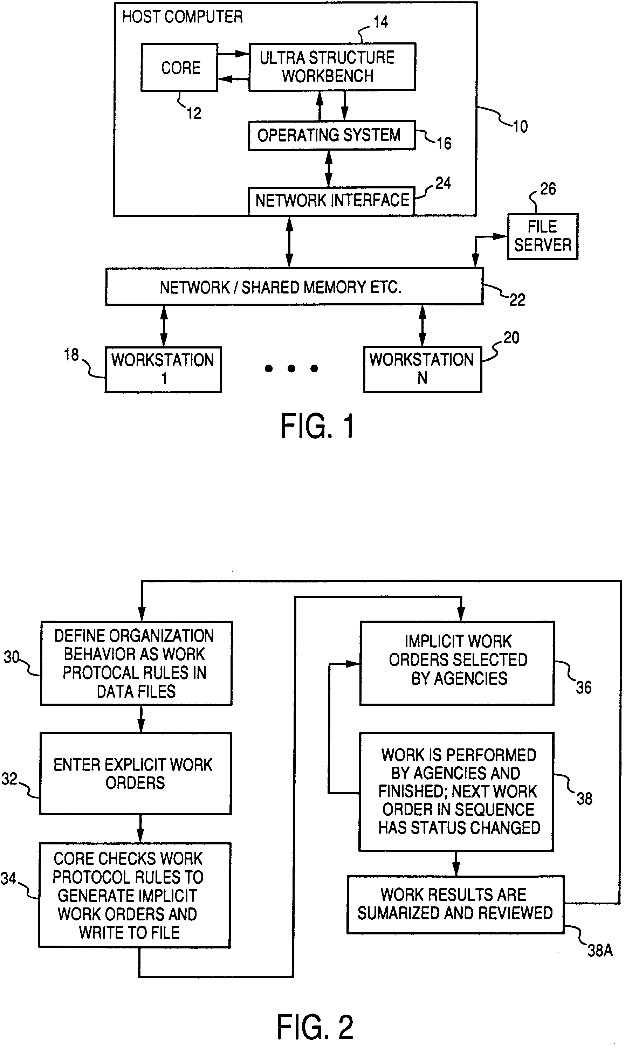

The typical application contemplates a network having a shared central computer/file server and multiple terminals or workstations. To implement the teachings of the invention on, for example, a DEC VAX machine, the Ultra-Structure Workbench code submitted in Appendix 69 must be ported to the VMS environment and compiled on a VAX machine. Then, the CORE source code of the Appendices needs to be copied onto the VAX and regenerated once by the Ultra-Structure Workbench to generate a new 'C' language source image which has embedded therein file structure definitions and certain function header and footer information. This new source image may then be compiled and linked by a standard DEC VAX 'C' compiler to generate an executable image. The process just described is a necessary prerequisite to the operational relationship between the Ultra-Structure CORE, the Ultra-Structure Workbench and the Operating System depicted in Figure 1.

The Ultra-Structure Workbench software is the interface between the Ultra-Structure CORE and the operating system in that function calls made by the CORE invoke tools embodied in the Workbench software. These tools themselves invoke facilities of the operating system.

Referring to Figure 1, there is shown a block diagram of a typical machine environment in which the teachings of the invention are employed. A host computer 10 can be any type computer from PC to supercomputer. Typically, it has an input device such as a keyboard, an output device such as a display, a magnetic media storage, random access memory and a printer none of which are shown in Figure 1. The computer 10 may be multitasking such as Unix/Xenix machines or single tasking such as DOS based machines. Further, the host computer may be file server or a collection of linked computers or microprocessors in a distributed computing environment.

The operations of the computer 10 are controlled by a set of programs some of which embody the teachings of the invention and some of which are operating system programs to manage the resources of the machine. In the machine of Figure 1, the teachings of the invention are principally embodied in and carried out by the set of programs called the Ultra-Structure CORE operating in conjunction with the Ultra-Structure Workbench 14 ("Ultra-Structure" is a trademark of Intellinomics Corporation) included herewith as Appendix 69, and the operating system 16. The operating system can be any of the various commercially available operating systems.

In a typical application in an organization having more than a handful of employees, the preferred environment is a network where the host computer 10 is coupled to a plurality of workstations of which workstations 18 and 20 are typical. The workstations communicate with the host processor through a network 22. In some embodiments, a workstation or workstations may actually be processes running on the host 10 or on another computer in a distributed computing environment. In such a case, the communication between such "workstations" and the host computer may be through shared memory, a pipe or any other interprocess transfer mechanism. In the most typical situation, however, the workstations are terminals or workstations with their own CPU's which communicate with the host computer 10 through a conventional network and network interface software 24 which interfaces the network 22 to the operating system 16. Typically, the data and program files needed to implement the teachings of the invention are permanently stored on magnetic media in a file server 26 and copies of the programs and data needed for any particular operation being performed on a workstation or on the host computer will be copied to random access memory of the machine doing the processing. When data files are revised, the updated data is then written to the data files in the file server.

In some embodiments, the teachings of the invention may be utilized on a personal computer with no network and no separate workstations.

All the programs and data structures according to the teachings of the invention are included herewith as Appendices and are listed on an index sheet included herewith. Hereafter program/file combinations may be referred to solely by their block identifiers, e.g. I07E. All references to block identifiers should be understood as references to the Appendices for deeper understanding of the program structure according to the teachings of the invention.

The rules defined by the users when they set up the system, or at a later time, are used to control the nature and flow of events that occur in the system. In the current preferred embodiment, there is one principal Block where each record defines a work order event, namely the Work Orders Data [I07E] included as an Appendix hereto.

The Work Orders Data [I07E] stores all requests for work from authorized agencies. When an order is entered, this Block checks the Work Protocol Rules [I45E], the System Control File [Z00B], and appropriate network data structures, assembles the appropriate protocol by generating the proper implicit work orders, detects collisions and removes any duplicate implicit work orders, compresses the order, and writes the generated implicit work orders to Block I07E for subsequent completion. Thereafter they will be made "available" according to sequencing instructions in the General Sequencer [I53E].

These facilities collectively implement the following four general types of processes, which are described separately in more detail below:

(1) Rule Definition Process
(2) Work Generation Process
(3) Decision Support Process
(4) Executive Analysis Process.

## THE RULE DEFINITION PROCESS

Referring to Figure 2, there is shown a flow diagram demonstrating the process of using the teachings of the invention. Step 30 in Figure 2 represents the process of defining the desired behavior of the organization in the form of work protocol rules and other rules stored in data files, which rules are generally defined by management. The details regarding the types of data stored and the identifications of the files in which the data is stored for the preferred embodiment are given below.

Users must define the Corporate Operating Rules that they wish their organization to follow in conducting organizational affairs and responding to internal or external stimuli. These Corporate Operating Rules are stored in a series of 30 computer files ("Blocks") which are described in the paragraphs below. The actual file formats, including field names, lengths, and types, are defined in Appendix 1. Note that several several additional files, not described below, are listed in Appendix 1; those files are useful but not essential parts of the current embodiment.

Each Block is defined by a 3-character Block-ID and a 1-character Version ID. The Block IDs do not mean anything; however, the Version ID is important. Thus (for example) "F01" would really be "F01E" in the Ultra-Structure CORE software which embodies the preferred embodiment of the invention. The preferred embodiment is the "E" version of the CORE software and the "B" version of the Workbench software according to the teachings of the invention.

Management enters their specific Corporate Operating Rules into these files. The Blocks that define rules are listed in alphabetical order by Block ID below. The contents of each of these blocks effectively defines, guides and constrains the behavior of the organization. For example, the inventory block constrains the bins in which various products may be stored etc., and the location network block defines how those bins are linked to various warehouses.

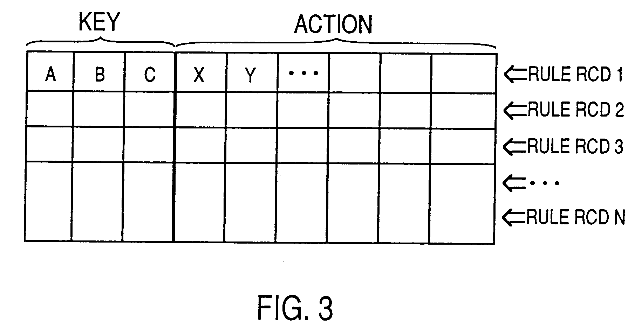

Referring to Figure 3, there is shown a diagram of the file structure of a typical rule represented as data. All rules encoded in data records have the structure shown in Figure 3 in that all rules have one or more key or condition fields and one or more action fields which define the action to be taken if the condition is satisfied. Figure 3 represents a block of data encoding N rules, each of which has a key comprised of three fields or conditions and the action which is to be taken if the conditions are all met. The fields of the key are always combined in conjunctive or by a logical AND function, but wild card (i.e. blank) field entries are allowed where any entry will satisfy the condition. For example, the first rule in Figure 3 might be interpreted as follows: if customer A orders product B and brand C, then warehouse X needs to palletize with pallet type Y. The actual rules in the Work Protocol block are much more complex, typcally involving about 12 fields in the key and about 17 fields in the action. Of course in alternative embodiments, other numbers of key fields and action fields may be selected. The action fields have a particular template or data structure which defines the types of data which goes into each field. The fields of the key are always read in the same order and also have a predefined data structure.

The data structures according to the teachings of the invention are critical in at least the following respects. It is believed to be new to use a computer to respond to an external stimulus containing a number of different components by analyzing those components and then accessing a data structure which has encoded therein rules of appropriate response to certain combinations of said components and using combinations of the components of the initial stimulus to filter out or select certain records from the data structure. The particular data structure selected and the order in which the fields are read is not critical to the invention. It is also believed to be new to combine the use of said data structure encoding rules of appropriate response with other data structures encoding networking information to classify external stimuli into classes of external stimuli which can be treated in similar fashion thereby reducing the number of rules that need to be encoded into the data structure. It is also believed to be new to encode rules of appropriate response in terms of data which defines the order in which to make selections of other rules encoded in data to detect and eliminate collisions between rules. The network information encoded in the data structures is especially powerful in that it allows the generalization of specific stimuli into more general classes of stimuli which may be reacted to in the same way. This substantially reduces the amount of data needed to encode all the rules for response. Further, the networks allow the same specific stimulus comprised of multiple components to be generalized into multiple more general classes based upon similarities of one or more of the individual components to the same combination of one or more components in other external stimuli. This multiple classification power further reduces the number of rules for response that need to be encoded into the data. The above factors are important parts of the teachings of the invention in various embodiments. Further, the data structure must have an arrangement that can handle data defining all the necessary "if" or "test" conditions which are desired. Further, the data structure must also have enough fields in the "action" sections of the data records to fully describe the desired actions, considerations, participants, objects etc. to fully carry out the desired work process. However, the specifics of the particular data structures chosen such as how many fields make up the key and/or the action portions of the rules, the particular semantics or meaning and the sequence for the selected fields, and other details of file structure are not critical to the invention. A data structure according to the teachings of the invention includes one or more data files comprised of one or more data records encoding appropriate responses to external stimuli stored in one or more locations in one or more machine readable memory media coupled to one or more computers, physical workstations or file servers.

The basic data structures in the current embodiment of the invention, wherein corporate operating rules may be defined, are as follows:

### F05E: Allocation Rules

Allocation Rules define, for a given scenario, an allocation amount and how that allocation amount should be allocated across actual data in the Summary Statistics Block [I09E]. This block plays a role in the "corporate metrics" function according to the teachings of the invention. This block stores data which embodies rules regarding how to allocate various organizational expenses (not tied to specific customers or projects, i.e., overhead expenses), "over the actuals". This means that such expenses as the president's salary, rent etc. can be allocated in various manners to the various acounts for purposes of analysis of the performance of the organization. For example, the president's salary may be allocated equally to all sales over the past year weighted by sales volume. The rules of allocation may be custom defined by the organizations' executives according to whatever theories of analysis of the organization are favored by the executive defining the rules. Multiple rules of allocation are contemplated by the teachings of the invention.

An "initial" allocation is multiplied by a fixed percentage to create a "target" allocation. The "target" allocation amount is allocated on a pro-rata basis across actual scenario data in the Summary Statistics [I09E]. The "initial" allocation, fixed percentage, and the method of allocating across data in Summary Statistics are all defined in the Allocation Rules Block [F05E].

### F08E: Scenario Descriptions

Scenario Descriptions define actual and forecast scenarios that are used for financial modeling, profitability and statistical analysis. A scenario is really just a way of organizing and differentiating allocation rules. For example, there may be a "marketing scenario" where the rules of allocation favored by the marketing personnel are collected. Such scenarios often involve allocation of overhead expenses weighted by sales volume. There might also be a "Chief Financial Officer scenario" where the rules of allocation favored by the CFO are collected. These rules may allocate overhead by units.

Each forecast scenario represents a particular instance of either allocating or projecting some dollar amount across actual financial data. In addition, there are actual operating results scenarios. These three scenario types are summarized as follows:

    o Monthly operating results (revenue, expenses, and orders) (these are typically pre-defined). This type calculation is automatic and does not need allocation rules in the F05E block.

    o Allocation of additional revenues, expenses, and other quantities across past operating results. This calculation uses the allocation rules of the F05E block to arrive at new revenue, expense etc. numbers after the allocations of overhead defined in the F05E block are made.

    o Projections into the future based on past operating results. This calculation uses the allocation rules of the F05E block to arrive at new revenue, expense etc. numbers with the allocations of overhead defined in the F05E block being the projection or "what if" variable.

Once a scenario is defined in this Block, the allocation or projection for the scenario is defined in the Allocation Rules [F05E]. Scenario calculation results are stored and displayed in the Summary Statistics [I09E].

### F0AE: Reason Codes

Reason codes represent pre-defined descriptions used throughout the Ultra-Structure CORE to explain details about various events or rules. Examples are the reason an employee resigned or the reason a product was "picked short", i.e., not all the product ordered was picked from an inventory bin because the inventory ran out etc.. Each agency can have its own set of reason codes.

I01E: Product Master Data

Product Master Data defines all goods, services, or messages ("products") that are sold, purchased, leased, rented or otherwise handled by the Company. Products can be from or for both external and internal customers and suppliers. They include messages, both temporary and permanent, that the Company is willing to pass on to various agencies. Only products that are included in Product Master Data (and work orders themselves) can be the object of a work order.

Any work order is characterized by an "action" (like deliver, fix, or cancel), and a "target" (good X, machine Y, order #3). Both the action and the target are represented as "products" in the Ultra-Structure CORE. This means that the Product Master Data includes not only identifiers and description of all the products offered by an organization but also the services or actitivies that the organization can perform. The action is represented as a service and the target as a good. Examples of products include: inspection services, 25 pound bag of product, 48x48 wooden pallet, bulk goods, liquid goods, payment of fees, message #S325, credit checking.

The Product Master Data also includes general categories that can be related to products, such as the type, form, or source of product. The types of relationships possible between products must be specified via the Product Network Data [I02E] and the Attribute Codes [I10E].

I02E: Product Network Data

Product Network Data defines rules in the form of data which relates or groups individual products or services (as defined in Product Master Data I01E) into larger groups. These relationships allow complex networks of product groupings. Each relationship is defined as a specific relationship type with an attribute code (defined in Attribute Codes, I10E).

The relationships between these work objects must be specified as well in Block I02E, using the relationship codes defined in I10E. This block as all the other blocks described herein consists of a database comprised of records with each record comprised of a plurality of fields in which attribute data is stored. For example, a product consisting of a 25 pound bag of goods would be related via Block I02E (data records embodying a product network that stores data which relates individual products or services into larger classes or groups for convenience in, for example, applying discounts to entire groups of products) and Block I10E (data records whose contents define all the attribute codes or ways of classifying the products or services which can be used to group individual products or services into larger groups) to a product consisting of the category "packaged goods" via an attribute code "type of goods".

I05E: Items Master Data

Items Master Data defines all "items" for a company. An item is a combination of a product and a specific brand (an agency). The brand indicates either for whom that product was made or by whom it is made. Brands allow products associated with specific companies to be tracked uniquely. This allows filling customer orders with specifically requested brands, purchasing of specific brands for inventory and resale, etc. Items may be included in a Work Protocol, e.g., an implicit work request can order the picking from inventory of a specific brands for filling of a specific customer order. The item data allows inventory of specific items or brands to be separately tracked. Generally only physical goods (not services or messages) are associated with a brand.

I09E: Summary Statistics Data

Summary Statistics Data contains calculated scenario results, including revenue, expenses, quantities, and number of orders, for each scenario. This Block also allows calculation of the results of combining different scenarios together. Scenario results stored in this Block must be defined in Scenario Descriptions [F08E] and then either (a) allocated or projected in Allocation Rules [F05E], or (b) posted when work orders defined in the Work Order Data [I07E] are completed.

I10E: Attribute Codes

Attribute Codes define the attributes that determine the structure of all the relational networks used within the Ultra-Structure CORE. These networks are: Agency Network, Products Network, Locations Network, Commitments Network, and Time Network. Attributes are used to link two entities together. For example, two agencies may be linked via a BILLTO attribute, indicating that Agency A has a bill-to entity of Agency B. Or two locations may be linked via a BIN attribute, indicating that Location A is a bin in Location B.

I11E: Breakpoint Codes

Breakpoint Codes define all breakpoints used within the CORE. A breakpoint determines high or low quantities associated with providing some good. For example, a work protocol may be different depending upon the quantity of product ordered causing a large order involving a quantity above a certain breakpoint range to be paletized whereas smaller orders would not be. Breakpoints are always defined as a range but may have a zero "spread". Breakpoints may also affect pricing. An example of a breakpoint is weights (for goods shipped).

I12E: Units of Measure

Units of Measure defines all units of measure that may be used when storing, purchasing or supplying something. Examples of units of measure are EA (each), BX (box), and HR (hour).

I14E: Batch Codes

Batch codes are data which are used to group implicit work orders generated from different explicit work orders for convenience in processing. For example, a batch code may group several implicit work orders ordering delivery of certain goods to different locations in the same city or state to be loaded on the same truck travelling to the general area.

I15E: Inventory Master Data

Inventory Master Data defines the locations from which physical goods or services may be sourced, i.e., picked in the case of products or obtained in the case of services. The preferred embodiment of the teachings of the invention as encoded in the software in the Appendices does not currently support the inventorying of services, but in alternative embodiments, such sourcing is contemplated within the scope of the invention. In the preferred embodiment, each combination of product, location, and agency identifies the inventory quantities that are available in several different inventory status categories.

I22E: Inventory Status Changer

The Inventory Status Changer allows users to change the status of inventory. It is normally used to change the status of goods from "good" to "flawed", to set goods aside for inspection, or to write down the value of goods from cost to market value. The Inventory Status Changer can also update the appropriate financial accounting records and inventory counts.

I25E: Attribute Chains

Attribute Chains defines all the attributes that are grouped into each "chain". A "chain" defines a list of attributes that relate to a particular network and which define groups for the entities related by that network. Thus, for example, the organization may wish to be able to track sales, performance, etc. by customer, by vertical market in which that customer does business, by sector in the economy in which that customer resides and by customer size. A chain ensures that when a customer record is entered in the S01E Agency Master Data block, that multiple records are entered for that customer said records being populated by data for that customer giving the attributes for that customer which are linked together by the chain.

Thus, a chain is a group of linked attrubutes, and each network for which chains are defined will have multiple records pertaining to the same entity, i.e., customer, product, service, with the contents of those records consisting of at least those attribute values for that entity linked together by the chain. Chains may be used to ensure that users enter all the necessary attributes for (e.g.) a new customer or location.

I37E: Time Master Data

Time Master Data defines all valid time periods, including all dates and all time periods such as weeks, months, quarters, calendar years, and fiscal years. The basic unit of time in the Ultra-Structure CORE is the day. Time Master Data defines arbitrary time periods based upon a sequence of days, thus allowing any type of time period to be defined. The types of relationships possible between these time periods must be specified as well, via the Attribute Codes [I10E]. Time codes will determine the way in which activities are summarized by the system.

I38E: Time Network Data

Time Network Data defines the rules which relate time periods to one another. Examples of these relationships are how a day relates to a week, month, fiscal year, calendar year, etc. Each relationship is defined as a specific relationship type with an attribute code defined in Attribute Codes I10. Thus two time periods defined in Time Network Data are related via an attribute defined in Attribute Codes [I10E]. An examples would be the date "102590" is part of (related to) "FYEAR" (fiscal year) "1991".

I40E: UM Conversion Rules

Units of Measure Conversion Rules define how to convert one unit of measure into another. The conversion is defined by a simple multiplying conversion factor. Each conversion rule may be related to a specific product.

This Block is set up during system initialization. It is automatically accessed by decision screens or blocks whenever units of measure are incompatible and must be converted.

I45E: Work Protocol Rules

Work Protocol Rules defines all the implicit activities that must be performed by all parties involved in a transaction. This block plays a pivotal role in the generation of implicit work orders automatically from explicit work orders entered by authorized agencies. Parties to a transaction can be a vendor, a customer, or some third party. For each "explicit" work order which must be performed (either for an internal or external customer), there may be one or more "implicit" work orders which also must be satisfied. For example, an explicit work order to deliver a product to a customer will require that a host of other actions be performed, such as credit checking, picking, shipping, payment of the shipper, return of pallets by the customer, payment by the customer within a certain time period, tax collection and payment, payment of sales commissions, special stenciling or messaging requirements, or any of many other actions which are herein referred to as "implicit". The totality of these implicit steps is referred to as a "work protocol", and is embodied in the user defined data stored in this block. The work protocols essentially define, for each product or service that may be offered to any agency, the necessary steps and "critical success factors" that must be carried out to get a particular work transaction done properly and completely.

I53E: General Sequencer

The General Sequencer defines the order in which the implicit steps generated from an explicit work order must be carried out to get a job done. This sequence is based on credit type, request type, and the specific item. For example, the first step in a sale to a credit customer would be a preliminary credit check, which would be followed by picking, traffic, and a final credit check. The General Sequencer would define the order of this event sequence.

R04E: Locations Master Data

Locations Master Data defines all locations used by an organization. Locations can be of many different types, including bins, warehouses, company-wide, or "other area" (state, sales territory, etc). The types of relationships possible between these locations must be specified as well, via Attribute Codes [I10E]. Examples of relationships are bins within a warehouse, streets within a city, etc. These relationships are specified in Location Network Data [R15E].

R15E: Location Network Data

Location Network Data defines rules for relating locations that have been defined in the Locations Master Data [R04E], such that (for example) bins are grouped into warehouses, street addresses are grouped by city, etc. An example of such a relationship is the street "100 Pine Street" is related to the city "San Francisco" by the relationship code (defined in Attribute Codes [I10E] ) "street within a city".

S01E: Agency Master Data

The Agency Master Data defines all general information about each agency, including name, credit and financial information, and other miscellaneous information. Agencies can be internal customers (departments or other branches), external customers (other companies), potential customers (prospects for whom proposals are worth writing), internal suppliers (internal task forces or work groups), or external suppliers (other vendors). The common characteristic of an agency is that it may order that an organization do work of some kind; it therefore also includes any entities that may actually do work for the organization.

Agency Master Data must also include all the internal workgroups and/or departments within the organization, all external ship-tos, all external bill-tos, and credit entities. Examples of workgroups are: Credit Department, Warehouse #10, Warehouse #10 Picking Workstation, Customer A, Ship-to #1 for Customer A, and Supplier X.

The types of relationships possible between these agencies must be specified as well, via Attribute Codes [I10E]. Examples of these relationships are: type of agency, vertical market of agency, size of agency.

S18E: Agency Network Data

Agency Network Data define how agencies are related to one another. Each agency can be related to a parent agency and a subsidiary agency. Taken together these linkages form a hierarchical network of relationships. An example of a relationship is Agency #2510 is the bill-to for Agency #3359 -- that is, Agency #2510 is related to Agency #3359 via the attribute code (defined in Attribute Codes [I10E]) "BILLTO".

S19E: Workstation/Destination Authorizations

Workstation/Destination Authorizations define for each agency what "destinations" messages may have, that is, it contains data records whose contents define and constrain approved destinations for messages originating from particular agencies. For example, these rules would constrain a message about palletizing loads to a warehouse workstation.

S20E: Commitments Data

Commitments Data defines each commitment made by an organization. A commitment involves a specific agency, time period, commitment type, dollar amounts and quantities, and other miscellaneous information. Each commitment may be from a customer or vendor or to a customer or vendor. It may include a formal contractual commitment, a bid, or merely a policy. Commitments Data also includes all ways of classifying commitments. The types of relationships possible between these commitments must be specified as well, via Attribute Codes [I10E]. An example of a relationship would be sales plan type.

S21E: Commitments Network Data

Commitments Network Data defines how commitments, as defined in the Commitment Data block S20E, are related to each other. An example of such a relationship is the commitment "Contract #2511" (a contract with a customer) is related to the commitment "PLANF" (sales plan F) via the attribute code (as defined in Attribute Codes I10) "SALPLN" (sales plan). This block allows commitments to be grouped into complex networks.

S23E: Agency Performance Data

Agency Performance Data contains data records which track financial stability, credit worthiness and payment behavior data about agencies over time. This allows the financial attributes of an agency to be examined for various periods.

S24E: Agency Messages

Agency Messages define a set of messages that the system displays whenever an agency places an order. When an order is placed by a particular agency, messages may be displayed on the order entry workstation which pertain to this particular agency reminding the order desk about important data relevant to this agency. Messages are defined uniquely for each agency and order type.

S25E: Handling Rules

Handling Rules work in conjunction with decision screens and sourcing rules to determine which work orders should be displayed on a decision screen. Handling Rules determine which decision screens should display work orders which are not assigned (sourced) to a particular workstation. Handling Rules are checked when various verbs are selected within a decision screen which display records on a work order that were not sourced to that workstation. If a product is defined in the Handling Rules, it will be displayed on the decision screen; otherwise it will not be displayed.

Z00B: System Control File

The System Control File is part of the Workbench and contains miscellaneous status, flag, and reference information used in various places throughout the Ultra-Structure CORE and/or Workbench. This information includes, for example, meta-protocol data. Normally data in this Block are set up once and then do not need to be modified.

Referring again to Figure 2, after the rules that define the desired behavior of the organization are defined by the user, the next step in using the system is step 32. This step symbolizes the process of entering explicit work orders.

**THE WORK GENERATION PROCESS**

Returning to the consideration of Figure 2, the next step in the process of using the teachings of the invention is for the computer to generate implicit work orders from the explicit work orders entered in step 32. This process of automatic generation of the implicit work orders is symbolized by step 34 in Figure 2. After these implicit work orders are generated, some additional processing on them is performed to eliminate duplication and they are sent to the workstations as symbolized by step 36. The process symbolized by step 36 represents a process of selective transmission of certain types of work orders only to workstations used by the agencies that do that type of work. Thus, for example, an implicit work order to pick inventory from an inventory bin will only be sent to the appropriate warehouse picking workstations, and a work order for a credit check will only be sent to credit checking workstation.

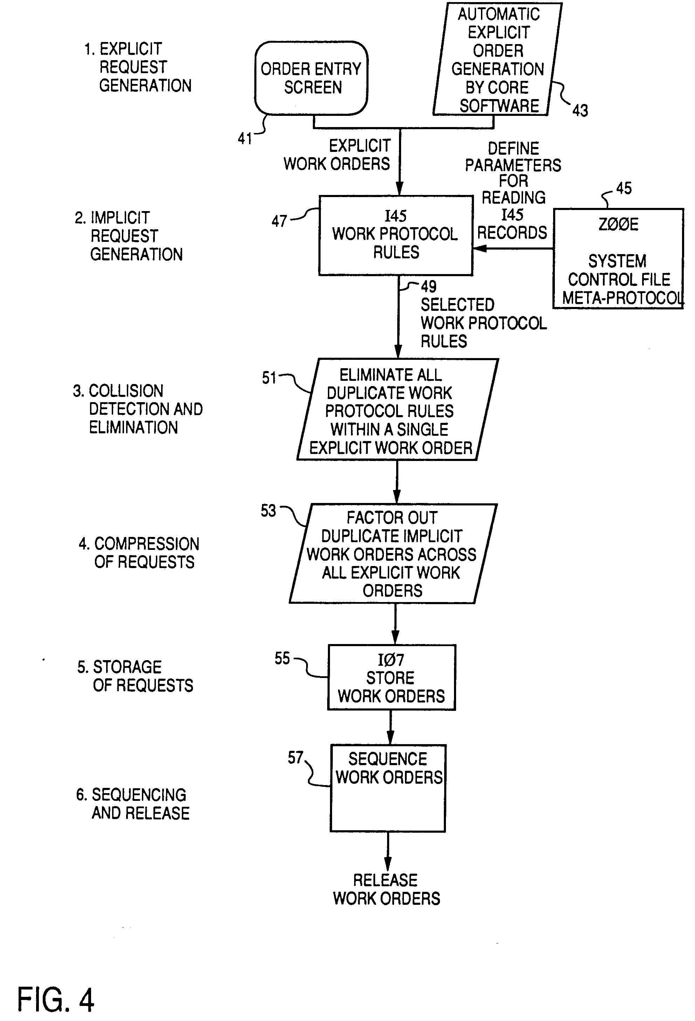

After the implicit work orders have been distributed to the appropriate workstations, the agencies assigned to do the work will do the work, and when it is finished, invoke a verb indicating that the work has been completed. This process is symbolized by step 38. After the work orders are finished they update the Summary Statistics Data [I09E] in summary form, for subsequent executive analysis as described further herein. This process is symbolized by step 38A. More details of the process for entering the explicit work orders, automatically generating the implicit work orders and subsequent processing of the implicit work orders is given in Figure 4.

Referring to Figure 4, there is shown a flow chart of the processing carried out according to the teachings of the invention in entering explicit work orders and processing them. There are a number of different steps needed to generate work correctly. These are described below and are shown in the work-flow diagram in Figure 4. There is also an example of the work generation process in Appendix 2.

1. Explicit Request Entry

Once the rules are defined, authorized agencies may make explicit requests of the organization. These are entered either (a) via an "Order Entry Screen", (b) by certain Workstation verbs, or (c) by other computerized processes in the CORE itself which may, in the course of following certain rules, generate new Explicit Requests which are treated exactly as though they had been manually entered. These requests are stored on disk immediately.

In the preferred embodiment, groups of orders entered at the same time are assigned one number (the "REQNO"); each explicit work order within that group is assigned a second number (the "LINENO"); and each implicit work order generated by an explicit work order is assigned a third number (the "SUBLINE"). These three numbers together uniquely identify any work that is to be managed by the system.

Step 41 represents the process of displaying an order entry screen to an order entry clerk. When an order is received, the clerk enters pertinent data such as the customer identification, quantity ordered, the product the customer wants and when it is to be delivered, specific brands desired if any, and any other pertinent information pertaining to the order. When the order is complete, the clerk invokes a "finished" verb which causes the order to be written to the Work Orders Data [I07E]. This block stores all explicit and implicit work orders.

### 2. Implicit Request Generation

Once an order is entered and stored, the process to expand the entire order begins to generate the implicit work orders mapped to the explicit work order. The first step in satisfying an order is to find out what needs to be done. The explicit order, in itself, does not contain any specific work or activity that can be completed. Using the rules defined by the user and stored in the blocks described above, in conjunction with an explicit order, the system assembles a group of implicit work orders that, when completed, will satisfy the explicit request.

The Ultra-Structure CORE will take each explicit request and, using the meta-protocol records in the System Control File [Z00B], retrieves all applicable Work Protocol records from Block I45E. A meta-protocol is a sequence of filters used to retrieve protocol records. In other words, the meta-protocol is a series of instructions on how to form filters with which to select Work Protocol rules out of Block I45E, each said filter containing a combination of anywhere from 1 to 10 key field contents that must be satisfied before a Work Protocol Rule is selected from which to generate implicit work requests. For example, the meta-protocol may specify that for the first filtering step, only Work Protocol rules are to be selected where the customer's vertical market code is found in the first field of the key and all other fields of the key are blank. This would select some number of Work Protocol rules which could be any number including zero up to the total number of rules in existence. Next, the meta-protocol would specify for the next filter step some new condition or conditions such as select all Work Protocol rules where the product's hazardous material code is found in the second field of the key and the customer's state is found in the fourth field of the key. This filter criteria would then be applied against the entire set of rules and not just the rules selected in the first filtering step. This process would be continued until all lines of the meta-protocol were carried out.

In the current preferred embodiment, there is only one meta-protocol. It is a generic "recipe" for filtering out context-appropriate Work Protocol rules from the universe of available Work Protocol rules. The specifics of the filter conditions used in the meta-protocol filtering steps are used in conjunction with the specifics of the explicit work order to form actual filters. However, in other embodiments any set of rules in the system may have a meta-protocol file that defines, in data, the order in which the rules are to be read, and the filter conditions that are to be applied to those rules, so that that information does not need to be written into the software that reads the rules.

When the system reads the meta-protocol rules and forms appropriate filters based on the explicit request data, it first looks for a specific "sub-protocol". In the current embodiment, the initial subprotocol code is "AA", but any code could have been used. This AA code is assumed by the software process that forms the first level mask or selection filter from the meta-protocol block Z00E. This AA code results in selection of the rules in block I45E which have the AA code in their sub-protocol key fields. That is, this points the retrieval process to a grouping of related protocol records, thereby enabling work to be carried out in pre-defined stages. The AA subprotocol rules in block I45E include a rule whose action is assigned to the CPU and which causes loading by the CPU of the next sub-protocol. This is also true for all other sub-protocols. That is, they each have a rule which causes loading of the next sub-protocol upon completion. That is, the first grouping of protocol records (e.g. to perform credit checking tasks) may point to any number of subsequent groupings (e.g. to manage physical picking, perform billing, etc.) by including a command within the protocol itself indicating the next subprotocol code that should be looked at. In the current embodiment, this is accomplished via an activity called "LOADaa", where the "aa" defines the next subprotocol code to be read. The benefit of this approach over simply loading the entire protocol at once is that, depending on the accomplishment or non-accomplishment of certain tasks, the next stage of the unfolding work transaction may change. Thus, for example, if shipping of a product is never accomplished for some reason, there is no point in loading in the work to perform billing.

The process of generating implicit work orders from the Work Protocol Rules [I45E] is repeated for every explicit request in the order. For each mask formed from the meta-protocol defined in the System Control File [Z00B] where there is a corresponding match in the Work Protocol Rules [I45E], there may be a plurality of such records selected all of which have met the selection criteria. However, for records to get passed onto the next stage of processing, they must pass the following two additional tests.

The first test is that the breaklevel applicable to the explicit request is matched by the selected record. Thus, for example, an order for 100 items might fall into a breakpoint range of 50-150 items; any work protocol rules that specified that breakpoint would be applicable, whereas a rule that was designated to apply only to orders of 250 or more items would not apply.

The second test is that the commitment ID associated with each selected record has a date range defined such that that commitment is still valid. Thus, for example, an order might be shipped January 10th; any work protocol rules (e.g. pricing rules) that had a commitment ID that included that date within the commitment date range would be applicable, whereas all rules that was designated to apply only to e.g. orders starting in March would not apply.

At the end of this stage, an array of selected records exists in the computer's core memory. Appendix 2 has a complete example of meta-protocol translation and implicit work order generation.

The process of filtering and selection of only the appropriate Work Protocol rules is symbolized by blocks 45 and 47 in Figure 4. The Work Protocol rules selected by this process are passed to the next step in the process, i.e., collision detection, as symbolized by line 49. All these selected Work Protocol rules contain the information which will be converted into implicit work orders. The only records which do not eventually get turned into implicit work orders are rules which are eliminated in the next two steps in the process.

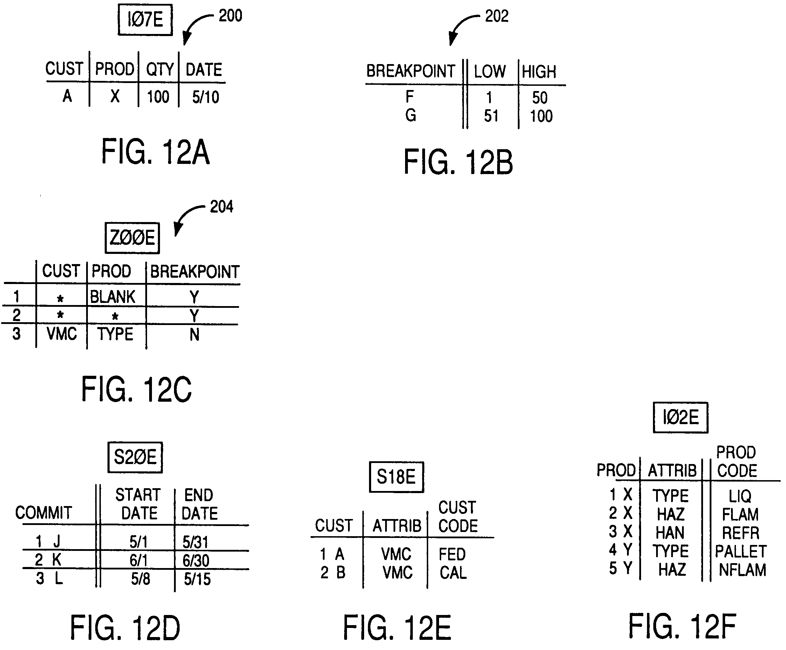

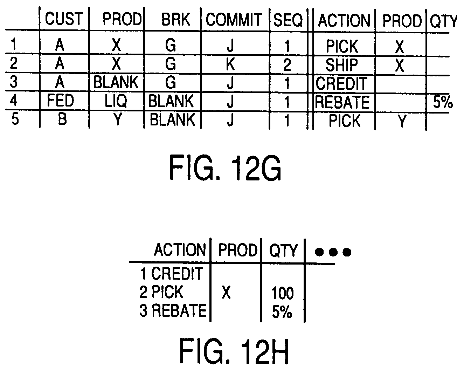

The logic of the record selection process is defined largely in the data structure of the Work Protocol Rules [I45E], and in particular by that portion of I45E that constitutes the record key. Masks formed from the explicit request as modified by the System Control File [Z00B] meta-protocol are partial keys which can be used to immediately check whether there are matches on the Work Protocol Rules [I45E]. Thus the record selection process is not sequential, it does not require reading the entire I45E data structure, and it is therefore fast and efficient. The teachings of the invention contemplate that whatever factors exist in any organization or work process to trigger work in the form of implicit work orders shall be added to the I45E key structure as necessary. The above description describes the generic aspects of the implicit work order generation process portion of the teachings of the invention. The specific details of the implementation of the preferred form of these generic teachings is described in more detail below with reference to Figure 12. Further, it should be noted that implicit work orders may in some cases be generated by the Workstations in response to certain conditions. Thus while the Work Protocol Rules [I45E] and the above-described process may generate a pick-planning and a pick-confirmation record for a product, the warehouse manager may choose to pick the product out of more than one bin, in which case the Picking Workstation [I91E] would itself generate new implicit pick-planning and pick-configuation records, one for each bin selected. Likewise, the Cash Application Workstation [I94E] starts with an implicit cash application record for the full amount expected to be received, but the customer may send less than was expected in which case the Accounts Receivable clerk can generate new implicit records to record any write-off amounts or other dispositions of the discrepancy.

### 3. Collision Detection

The order in which the Work Protocol rules are retrieved from Block I45E is essential, since in the event of collisions the Ultra-Structure CORE will use the first record selected and ignore the second (this is called a "collision"). Such records are then eliminated from the computer's core memory.

Since any selected Work Protocol rules will eventually be turned into implicit work orders providing they survive the tests noted above and the collision detection and compression process, the distinction between Work Protocol rules and implicit work orders will be hereafter be dropped and they will be referred to as implicit work orders.

A collision occurs when generation of implicit work orders across a single explicit work order by the process symbolized by steps 45 and 47 results in creating two or more duplicate work orders. A work order is considered a "duplicate" when both the activity (I07.ACTIVITY) and a product (I07.PROD) are the same in two different work orders. When this happens, the first record that was retrieved "wins" and all other duplicate records are ignored. This collision detection process is symbolized by step 51 in Figure 4.

The meta-protocol in Z00B defines the order that the implicit records are to be retrieved from I45E. Collisions are only detected and resolved within the implicit work orders generated from a single explicit request; duplicates across explicit requests are not detected, but may be "compressed" out as described in the next step.

### 4. Compression

After implicit work orders are selected for an explicit work order, the Ultra-Structure CORE checks to see if there are duplicate work activities across a number of line items contained in a particular explicit work order. That is, if the separate line items of an explicit work order from the same customer resulted in selection of the same activities multiple times, then the duplicate implicit work orders are candidates for compression. If multiple duplicate activities, which are represented on different implicit work orders, have been selected, and if the duplicate activity was flagged as "compressible" in the Product Master Data [I01E], then the CORE will eliminate the duplicates and assign the one survivor to apply to the whole explicit work order.

Every activity has a "compression" flag in Block I01E. The compression flag indicates if an activity needs to be performed once for the entire order (I01.COMPFLAG = "Y"), or performed as many times as it appears (I01.COMPFLAG = "N"). For example, CRDCPU (credit checking) needs to be performed once at the order level, whereas the PICKPL (pick planning) needs to be performed for each line item separately. Thus, CRDCPU will have COMPFLAG = "Y", while PICKPL will have COMPFLAG = "N". Compressed records are written with I07.LINENO = 0.

This compression process is symbolized by step 53 in Figure 4.

## 5. Storage

The remaining implicit work orders in the computer's core memory are now written to the Work Orders File [I07E] as symbolized by step 55.

## 6. Sequencing & Release

After the order has been entered, generated, compressed, and stored, the system checks the General Sequencer [I53E] to see whether any of the implicit requests may be acted upon immediately. If so, it then changes the status of those orders from (U)navailable to (A)vailable, meaning that the assigned agency can start work on them at will. When the work is finished, the agency enters a finished code by invoking a verb to that effect. The General Sequencer [I53E] is then accessed to determine the next implicit work order or orders to be performed and their availability codes are changed to (A)vailable. The next time the next assigned agency logs on or goes to his or her workstation, the next implicit work order(s) in the sequence would be waiting for them. This process is symbolized by step 57.

The second major objective according to the teachings of the invention is to provide decision support to the agencies assigned to do the work specified in the implicit work orders. This faciltity is provided through the mechanism of decision screens and verbs or commands displayed on those decision screens which the user can invoke to have access to other information needed to do the work ordered.

## THE DECISION SUPPORT PROCESS

All of the actively available work to be done in the Ultra-Structure CORE is defined and stored in the Work Orders Data [I07E] defined above. To provide a decision support environment for each workstation, whereby the agency using the workstation can obtain assistance in completing the work through use of a variety of function-specific "verbs", the Ultra-Structure CORE provides a number of "Decision Screens" for each workstation. Thus, for example, an implicit request for a credit check will show up on a Credit Workstation [I97E], along with verbs for decision-support functions like "show customer profile", "show customer history", etc. Each verb may then bring up a new decision support screen.

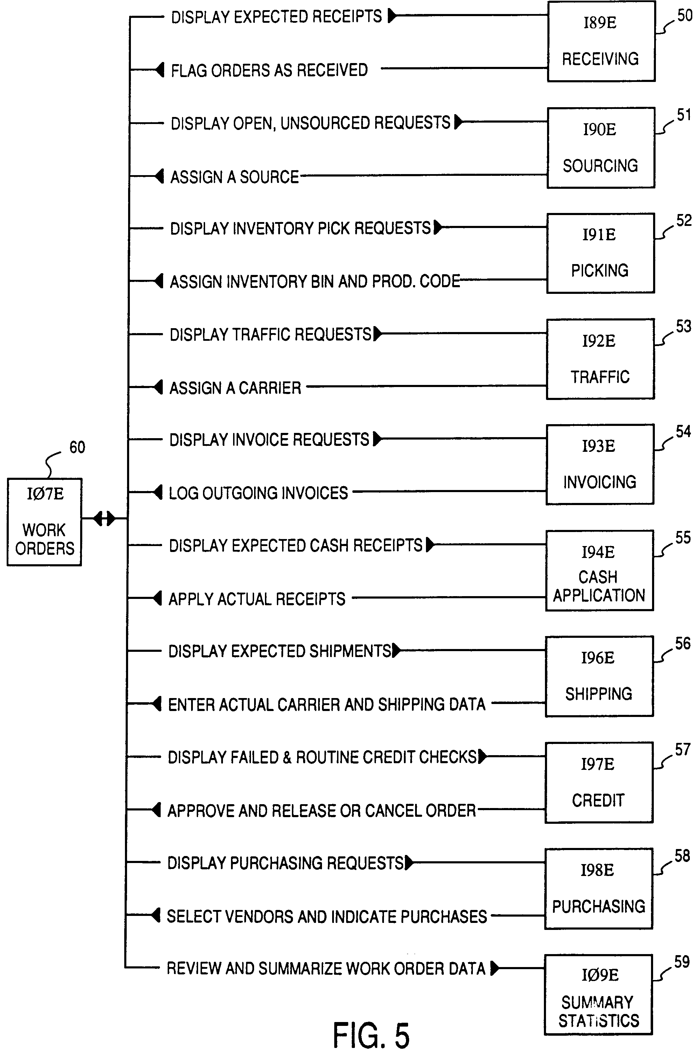

Referring to Figure 5, there is shown a block diagram of the various Workstations used by agencies to do the work defined by the work orders generated by the process represented by Figure 4. Figure 5 also represents the various programs in the Ultra-Structure CORE that assist workers in accomplishing the work defined in the work orders stored in I07E. Each of blocks 50-59 represents a different type of workstation where different types of work are accomplished. "Workstation" as the term is used here has no physical relationship to the workstations pictured at 18 and 20 in Figure 1. Each workstation shown in Figure 5 represents a function which can be performed on any physical computer terminal or computer workstation in the network. In other words, when a credit manager logs onto a terminal or workstation in the warehouse picking area, his or her logon file contains identification information which identifies the terminal device he or she is using as a particular type of "workstation" and which limits the types of work orders which will be displayed on that workstation.

The top line leading from Block I07E 60 to each of the workstations represents the types of implicit work orders that may be sent to that type of workstation and which will be selected according to selection criteria supplied by the user to generate a composite decision screen which includes a list of all the implicit work orders which are in (A)vailable status for that workstation and which meet the user's selection criteria. Examples of such selection criteria include, "all the work orders that are due today" or "all the work orders for shipments to customer X", etc. The decision screen then lists all the selected work orders and, in the preferred embodiment, also displays a set of verbs or commands the user can invoke to gain access to more information needed to process the work orders.

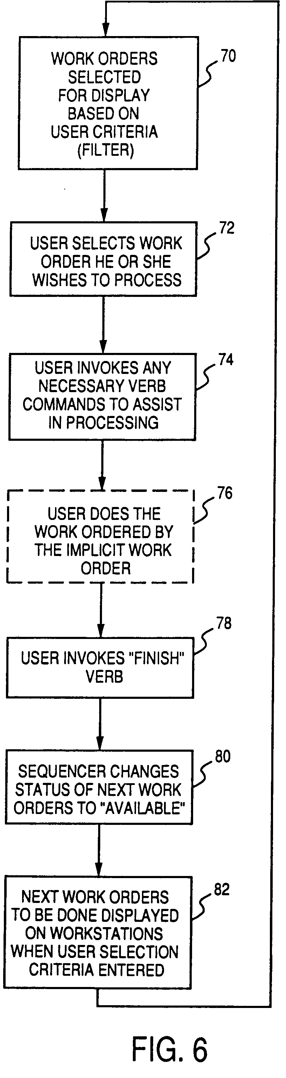

The bottom lines leading from each of blocks 50-59 toward block 60 represent the kind of work result to be achieved as a result of the implicit work orders sent to the workstation. Upon finishing each work order, the workstation causes the sequencing process to change the status of the work orders just completed to (F)inished and determines the next work orders to be made available. The status of these next work orders is then changed to (A)vailable and they are either sent to the appropriate work stations or, as in the preferred embodiment, they will be stored and will be sent to the appropriate work stations whenever an agency logs in and asks for that type of work order. Figure 6 gives more details on this entire decision support process.

After the agents assigned to do each work order complete their assigned task by using the work-support verbs, they use a "finish" verb to indicate completion. The completion of a work order triggers the availability of the next work order, and updates certain Summary Statistics [I09E]. All transactions are then recorded on the Work Orders Data [I07E].

Referring to Figure 6, there is shown a flow chart of the decision support process where work orders are displayed, verbs are invoked to obtain access to other information or services, the work is completed by the agency, and there is subsequent processing of work orders that follows completion of the work.

Anytime a user uses a workstation, a verb may be invoked by the user which causes a record selection screen to be displayed. This screen, when populated with user-supplied data, defines additional record selection criteria by which various implicit work orders that have been assigned to that workstation are selected for display. The selected work orders are then displayed on the screen in a list on what is called a "decision screen". This process is symbolized by step 70 in Figure 6.

Next, in step 72, the user selects which work order to process. In the preferred embodiment, this is done by movement by the user of a cursor or pointer using a mouse, other pointing device or keyboard arrows. In alternative embodiments, this selection process may be done using a touchscreen, voice commands, typing work order ID number etc.

In the preferred embodiment, the decision screen displays various verbs which can be invoked by the user. In other embodiments, the verbs may not be displayed or may be displayed in pull-down or pop-up menus. Where the verbs are displayed, they may be invoked by pointing to them or typing their first letter. Where the verbs are not displayed, they may be invoked by typing the verb name or a corresponding acronym. This process is symbolized by step 74. The available verbs vary by decision screen, but for a credit decision screen for example, typical verbs that might be invoked would by "show a credit profile", "show payment history", etc.

Invocation of a verb often results in the display of a new screen with new information displayed thereon which is useful in processing the work order or orders the agency is currently processing.

The user then analyzes the information on the new screen, makes any decisions necessary and either does the work or invokes new verbs for the display of new information. Typically, the new screens of data that result from invocation of a verb also display their own verbs which are usually different from the verbs displayed on the previous screen. Sometimes the new screens have no verbs.

In the preferred embodiment, when the user is done examining the new data, he or she gives an exit command by touching a function key defined as the exit key. In other embodiments, the exit command may be invoked by pointing to an exit "button" displayed on the screen, selecting an " exit " command, etc.

Step 76, shown in phantom, symbolizes the process of the user physically doing the work ordered by the implicit work order. This may be picking items from inventory bins, calling a customer for a financial statement, calling a shipping agency to determine transport capacity, etc. This step is shown in phantom in Figure 6 because it is an act done by the agency; however such acts can be performed by a machine acting as an agency (e.g. a bar code printer could actually print according to the contents of an implicit request), according to the teachings of the invention. For example, the current preferred embodiment assigns some work to an agency called "CPU", e.g. for preliminary credit checks. Alternative embodiments may drive actual machines doing physical work.

Next, after completion of the physical work, the user invokes the "finish" verb. This is sybolized by step 78. The process of supporting the decision screen is a foreground process in multitasking environments which then sends a message to a background process which does the sequencing and management of status fields of downstream work orders, i.e., work orders which command work to be done later in any particular sequence of work to be done. The finish process also does other things like updating statistics used for the executive analysis process described below in the preferred embodiment. However, in alternative embodiments, the background process could also do these other functions. In nonmultitasking environments such as DOS, the background and foreground processes are run sequentially.

Step 80 represents the process of updating the status fields of the work order records. In the preferred embodiment, the decesion screen process updates the status field of the work order or orders just finished to indicate they are done and then sends a message to the background process. The sequencer process, running in background, updates the status field or fields of the next work order or work orders in the sequence to indicate they are now available for execution. These next work orders will then be sent to the appropriate workstations whenever the appropriate selection conditions are entered by the user. This process is symbolized by step 82. The process then repeats itself until all work is done.

In the current embodiment, the Ultra-Structure CORE provides decision support for the work areas listed on the following pages. Described in the text are examples of the different decision screens, verbs, and types of information that are provided for each workstation.

I07E: Order Entry Workstation

The Order Entry Workstation [I07E] is the entry point for manually-entered explicit orders to the Ultra-Structure CORE. However, such explicit orders may also be generated automatically or by request of users using the various other Workstations described below. It is at this point that the explicit orders are analyzed into the implicit orders. In entering work orders and generating implicit work orders, the user may use any of the following commands or "verbs":

<sElect>. This is the only verb available initially. After it is chosen, the user may enter a work order number, or a blank to indicate a new order is to be entered. If a blank reqno is entered, the user may then enter all the fields which are to be shared by more than one explicit request in the group, for example, the ship-to location, the delivery date, and the order type (e.g. "deliver to the customer" or "will be picked up by the customer"). All of these fields are defined as "header" fields, leaving the rest of the order (i.e. what the customer wants) to be entered in detail line fields. Once all the fields in the header are entered, users may populate the detail area of the screen with explicit requests.

<Add>. This verb allows the user to enter additional explicit requests to an order. This continues until the user presses the <F1> or <F2> key.

<Change>. This verb allows the user to change an order. If the order has not already been "finished" as described below, then the system simply updates the data for each explicit line as indicated by the user. If the order has been "finished" and work has been started, then the system may generate "reversals" of implicit work orders already done, or generate new implicit work orders, as required by the nature of the change that was made by the user and the status of the previously issued implicit work orders. These reversals or additional records are generated via the same process of implicit work order generation as is done for new explicit requests, described elsewhere herein.

<Delete>. This verb allows the user to either delete a single line, or cancel the entire order.

<Finish>. This verb is used after an order is correctly entered; it means that Order Entry is done with the order and other workstations can start working on their tasks. When this verb is selected, the system writes the order to the computer disk, computes the total weight of the order, and assigns a break level code (as indicated by the Breaklevel Rules [I11E]) for the order. The user can either accept the recommended break level, or override it. The system determines initial estimated pricing at this time by reading, in the current embodiment, the "AR" (billing) subprotocol of the Work Protocol Rules [I45E], computing and displaying estimated pricing including discounts, allowances, etc. as may be specified in the Work Protocol Rules [I45E]. Next, the process of expanding the explicit order and generating implicit records from the Work Protocol Rules [I45E] begins. In the current embodiment, the system first retrieves the "AA" subprotocol and proceeds as stated above to generate the implicit records and populate each implicit record with the correct information. Everything to this point has taken place in the core memory and no implicit record is written to I07E yet, so the system now writes the implicit records to Block I07E and checks to see if there are any activities that can become (A)vailable for someone to start working on; if so, it makes them available. If specified in the protocol, the system next performs the credit check activity assigned to the CPU, and loads any other subprotocols that were specified to be loaded in the implicit work orders. There may be any number of tasks assigned to the CPU at this point or any point in the completion of specified work processes.

<ordHead>. This verb lets the user change the contents of the header area, before finishing the order. The user can change any field except the Requisition Number. Thus, for example, the customer may decide to pick up the order instead of having it delivered, in which case the order type would change for the entire order.

<Messages>. This verb allows users to enter an "ad hoc" (1-time) message and indicate where it is to be printed or displayed. Note that in the current embodiment of the invention, so-called "standing messages" are treated as products and may be specified in the Work Protocol Rules to be triggered under certain specified conditions. Thus, for example, messages that are to be printed on an invoice, a bill of lading, or an export document may be pre-defined and do not need to be entered at the Order Entry Decision Screen.

<sOurce>. This verb, in its current form, displays the inventory on hand for each location for the products on order, and lets the user choose the warehouse they want to ship from.

<Save>. This verb lets the user save their current work, by writing it to Block I07E in its unfinished state.

<View>. This verb allows the user to see the entire order including both explicit work orders and, if desired, the implicit work orders (if any) that have thus far been generated for the order.

<mUltiplier>. This verb is used to create future orders based on a current order. It is used when users have just entered (and not finished) an order, and wish to copy it one or more times. The clone can be for any date(s) in the future.

I09E: Executive Analysis Workstation

This workstation is described below under the executive analysis process.

I89E: Receiving Workstation

This workstation starts by displaying the "Incoming Shipments Screen", which displays a list of expected incoming shipments for a selected inventory location. In the current embodiment, for each incoming shipment the following fields are listed:
    o order number
    o reference number
    o originating location
    o order date, and
    o receipt date if applicable.
This screen provides the following verbs:

*<Describe>*. This verb calls a "Descriptions Screen" to display long descriptions of the products, the receiving transaction type, and the originating and receiving locations.

*<sElect>*. This verb calls a "Selection Criteria Screen" to allow the user to enter or review the selection criteria for the shipments to be listed on the Incoming Shipments Screen. Possible selection criteria in the current embodiment are:
    o transaction type
    o receiving location
    o date range
    o originating location
    o vendor
    o order number
    o reference/purchase order number, and
    o order status.

*<Inventory>*. This verb calls the "Inventory Status Screen". This screen allows the user to inspect the on-hand, on-order, in-transit and available quantities for a given product for different levels of locations (i.e., bins or warehouses). This screen has the following verbs:

*<Down>*. This verb displays the abovementioned totals for the specified product at one level below the currently displayed level (e.g., if the currently displayed quantities are for the entire warehouse, this verb will display the bin totals for the current warehouse entry)

*<Limit>*. This verb allows user to modify the Limiting Date field in the header portion of the screen. After the new date is entered, the list portion of the screen is reloaded according to the newly entered date.

*<Product>*. This verb allows user to modify the Product field in the header portion of the screen. After the new product code is entered, the list portion of the screen is reloaded according to the newly entered product code.

*<Up>*. This verb displays the abovementioned totals for the specified product at one level above the currently displayed level (e.g., if the currently displayed quantities are bin quantities, the <Up> level verb will display the warehouse quantities).

*<Lines>*. This verb calls the "Detailed Receipts Screen" to display detailed information for the current order from the Incoming Shipment list. Current header fields include:
    o order number
    o type
    o source
    o order date
    o total weight.
For each line item on the order, the following fields are displayed:
    o product number
    o quantity
    o unit of measure
    o weight
    o inventory location
    o production date
    o date received
    o status, and
    o reason code.
This screen contains the following verbs:

*<Add>*. This verb allows user to receive goods without an accompanying purchase order by creating a new purchase order.

*<Describe>*. This verb calls the "Descriptions Screen" to display long descriptions for the receiving activity, receiving location, source location, product and reason code.

*<sElect>*. This verb allows the user to enter a new order number. Once this number is entered, the system will search for this order and display the line items if it is found.

*<Finish>*. This verb updates the database with the receipt data.

*<New>*. This verb allows the user to create a new purchase order. It calls the "Start Transaction Screen" to prompt for purchase order header information followed by the "New Item Screen" to prompt for product information.

*<View>*. This verb calls an "Order Viewing Screen" to display some customer/work order number data. The user is prompted for a customer ID and/or a work order number. For each entry found for the input keys, the following fields are displayed:
    o agency
    o activity
    o transaction type
    o status
    o reason code, and
    o reference number.
This screen contains only a <rEstart> verb, which allows the user to specify other selection criteria without having to return to the next-higher level of screen. Once the new criteria is entered, the screen is reloaded with the new data.

I90E: Planning Workstation

This workstation calls the "Available Functions Menu" and allows the user to choose from the following options:

[1] The "Inventory Status Display" option calls the "Demand versus Supply Screen". This screen provides the following verbs:

<Describe>. This verb calls the "Description Screen" to display the long description of a product.

<sElect>. This verb calls "Selection Criteria Screen". This screen prompts the user to enter the selection criteria for the Demand versus Supply Screen. Record selection criteria includes:
o user
o product
o brand
o location, and
o control dates.

<Inventory>. This verb has the same functionality as decribed for the <Inventory> verb in Workstation I89E above, plus the following:

<sWitch>. This verb calls the "Available Functions Menu" (see above) to allow user to switch directly to another function without having to exit the current screen.

[2] The "Customer Orders Display" option calls the "Products on Order Screen". In the current embodiment this screen lists the following fields for the selected entries:
o customer ID
o order number
o product code
o brand
o date ordered
o quantity ordered
o inventory source
o available inventory, and
o date.

This screen supports the following verbs:

<Describe>. This verb calls the "Descriptions Pop-up Screen" to display the long description of customer and product.

<Commit>. This verb calls the "Sourcing Options Menu".

This menu contains the following choices:
o Schedule Production for TAGGED Items
o Request Transfers for TAGGED Items.

<sElect>. This verb calls the "Selection Criteria Screen" to get selection criteria for the "Products on Order Screen".

<Inventory>. This verb is the same as the <Inventory> verb described above

<Tag>. This verb "tags" the current entry for future operations.

<sWitch>. This verb is the same as the <sWitch> verb described above.

[3] The "Transfer Order Management" option calls the "Scheduled Transfers Screen". This screen displays inventory transfer information. Fields displayed include:
o source location
o order number
o product code
o brand
o quantity
o date
o status, and
o weight.

This screen supports the following verbs:

<sElect>. This verb is the same as the <sElect> verb described above.

<New>. This verb calls the "Start Transfer Screen" to prompt the user to begin entering the transfer data. When this screen is exited, a new order number is generated by the system and the user is prompted to enter the remaining transfer data. Once all the transfer data has been entered and edited, a new menu is displayed with the following verbs:

<Describe>. This verb calls the "Descriptions Screen" to display the long descriptions for the user, product and product line.

<sElect>. This verb is the same as the <sElect> verb described above.

<Finish>. This verb finishes a transfer request.

<Messages>. This verb is the same as the <Messages> verb described above.

<inVentory>. This verb is the same as the <Inventory> verb described above.

<sWitch>. This verb is the same as the <sWitch> verb described above.

<Add>. This verb adds a new entry to the transfer request.

<Change>. This verb allows the user to change the current entry on a transfer request.

<New>. This verb begins a new transfer request. It is the same as the <New> verb described above.

<Remove>. This verb allows user to delete the current entry from a transfer request. The user is asked to confirm deletion prior to removing the entry.

<Tag>. This verb tags the current entry.

<sWitch>. This is the same as the <sWitch> verb described above.

[4] The "Change Location" option calls the "Location Change Screen" to allow the user to change locations. (This option is only available after an initial location has been selected.)

I91E: Picking Workstation

This workstation displays the "Picking Decision Screen", which displays a list of upcoming shipments. For each shipment, the following fields are displayed:
 o order number
 o reference code
 o customer name, and
 o expected ship date.
This screen provides the following verbs:
 <sElect>. This verb calls the "Selection Criteria Screen" to get the selection criteria for the shipment data. Possible selection fields are:
 o user
 o transaction type
 o order status
 o date range
 o order number
 o customer purchase order number, and
 o batch number.
The user can also use this screen to specify whether or not to display pallets. Once this criteria is entered, the shipment list is reloaded using the new selection data.
 <Inventory>. This verb is the same as the <Inventory> verb described above.
 <Lines>. This verb calls an "Order Detail Screen" to display detailed information for the current order in the shipment list. Order header fields include:
 o order number
 o batch code
 o ship date, and
 o total weight.
For each line item on the order, the following fields are displayed:
 o product number
 o quantity
 o unit of measure
 o weight
 o inventory location
 o production location
 o inventory source
 o time
 o status, and
 o reason code.
This screen contains the following verbs:
 <sElect>. This verb allows the user to enter a new order number and specify whether or not pallets are to be displayed. When these fields have been input (or <Control-J> is pressed), the line items for the new order number are retrieved and displayed in the line item area of the screen.
 <Inventory>. This verb is the same as the <Inventory> verb described above.
 <Pick>. This verb designates which bins are to be picked from, and updates the committed status of inventory in the selected bins.
 <View>. This verb is similaar to the <View> verb described above.

I93E: Invoicing Workstation

This workstation calls an "Invoice Review Screen" that displays a list of selected orders. For each order, the following fields are displayed:
 o order number
 o ship to address
 o customer name
 o status, and
 o date.
This screen supports the following verbs:
 <Change>. This verb permits users to change fields, primarily in order to make adjustments to ensure a proper invoice. Normally this should not be necessary.
 <sElect>. This verb calls a "Selection Criteria Screen" that allows the user to reenter or inspect the selection criteria used to populate the order data screen. Possible selection criteria include:
 o order number
 o invoice number
 o ship to address
 o bill to address, and
 o order status.
 <Print>. This verb prints a report of the selected orders.

I94E: Cash Application Workstation

This workstation calls a "Bank Batch Information Screen". Fields displayed on this screen are:
 o user
 o transaction type
 o bank identification code
 o batch code
 o deposit date
 o total gross amount
 o total discrepancy amount
 o total writeoff amount
 o total discount amount
 o total charge back amount
 o total UCD's, and
 o the total net received.
Verbs supported by this screen include:
 <Audit>. This verb prints an audit report.
 <Batch>. This verb calls the "Cash Application Screen" to display check data. Header data includes:
 o check number
 o check amount
 o postmark date
 o invoice number or order number or bill-to code
 o date range
 o running total
 o MICR number
 o bill-to address.

For each invoice/order that the check applies to, the following fields are listed:

  o invoice/order number
  o gross dollar amount
  o discount
  o net price
  o required dollar amount
  o amount paid to date
  o due date
  o division
  o task
  o message number, and
  o reason code.

After the check selection criteria has been entered and the check data retrieved, the following verbs are available to the user:

*<Adjust>*. This verb enables the user to enter an adjustment amount and reason.

*<Change>*. This verb provides a pull-down menu which asks the user whether they want to change header or detail data. If header is chosen, the user can change the header fields, if detail is chosen, the user can update the list of entries.

*<sElect>*. This verb allows the user to reenter the selection criteria.

*<Finish>*. This verb updates the database with any changes made to the screen.

*<Invoice>*. This verb calls the "Invoice Selection Screen" to allow the user to enter invoice selection criteria. Possible selection criteria are:

  o invoice number
  o order number
  o bill to
  o date range, and
  o transaction type.

For each invoice selected, the following fields are listed:

  o invoice number
  o request number
  o bill to
  o due date
  o transaction type, and
  o invoice amount.

This screen supports the following verbs:

*<sElect>*. This verb allows the user to re-enter the invoice selection criteria described above.

*<Invoice>*. This verb calls the "Invoice Replica Screen" to display a copy of the current invoice from the list of invoices. Fields displayed on this screen include:

  -- the bill-to code and address
  -- the ship-to code and address
  -- the order number
  -- the invoice number
  -- the ship and invoice dates
  -- the purchase order number
  -- the salesperson

  -- the broker
  -- the carrier
  -- the discount and expiration dates
  -- the quantity on backorder, and
  -- any term codes for this invoice.

For each product on the invoice, the following fields are listed:

  -- number of units shipped
  -- product code and description
  -- unit price and total price.

*<Msg*. This verb calls a "Message Screen" to display message codes and text for the current order from the list of orders on the Cash Application screen. This screen supports two verbs:

*<Add>*. This verb allows the user to add messages to the order.

*<sElect>*. This verb allows the user to select another order.

*<Neword>*. This verb allows the user to add another order to the list of orders covered by the check.

*<Tag>*. This verb allows user to tag a current list entry for later processing.

*<Change>*. This verb allows the user to change the user, transaction type, bank identification, batch and/or deposit date.

*<Newbatch>*. This verb allows user to create a new invoice batch. It clears the existing data on the screen and prompts the user to enter their user name, the transaction type, the bank's identification code, the code for the new batch and the deposit date.

### I96E: Shipping Workstation

This workstation displays a "Selection Criteria Screen". The user can then enter selection criteria to display information about certain shipments. Possible criteria include:

  o order number
  o reference number
  o batch, and
  o date range.

For each shipment that matches the search criteria, the following data will be displayed:

  o order number
  o reference number
  o customer name, and
  o ship date.

This screen supports the following verbs:

*<sElect>*. This verb allows user to reenter the selection criteria.

*<Lines>*. This verb calls an "Order Detail Screen". This screen provides a detailed picture of the entire order. Header fields include:

  o order number
  o customer name
  o bill of lading number
  o batch
  o weight, and

o ship date.

For each item on the order, the following fields are displayed:

o line number/subline number

o quantity

o product code

o brand

o weight

o reason, and

o status.

This screen supports the following verbs:

*<sElect>*. This verb is similar to the <sElect> verb defined above. Once the new order number is input, the program will retrieve the new order and display it on the screen.

*<View>*. This verb calls an "Order Viewing Screen" to display pick request information for the current order from the order list on the Shipments screen. The following fields are displayed on this screen:

o customer ID

o customer name

o request number

o a list of the following fields for each agency included in the pick request:

-- agency code

-- activity

-- type

-- status

-- reason

-- document reference number.

### I97E: Credit Workstation

This Workstation calls the "Credit Decision Screen" to display credit data for all orders on the system. For each credit order the following fields are displayed:

o order number

o ship date

o customer name

o order amount

o customer credit limit

o number of messages attached to order

o reason code

o city

o shipped amount, and

o invoiced amount.

Verbs supported by this screen are:

*<Detail>*. This verb calls the "A/R Detail Screen" to provide a detailed credit picture for a particular customer. Fields displayed on this screen include:

o customer ID

o customer name

o customer address

o contact person's name

o credit limit

o ordered amount

o shipped amount

o A/R total amount

o diputed amount (if any)

o amount charged back, and

o invoice amount.

For each invoice for the customer, the following fields are listed:

o invoice number

o purchase order number

o ship and invoice dates

o open amount

o task

o transaction type, and

o order number.

This screen supports only the <sElect> verb, which allows the user to select another customer's credit report.

*<Approve >*. This verb permits users to approve customer credit requests.

*<Messages>*. This verb allows the user to review or add messages to the current order from the list.

*<Orders>*. This verb calls the "Open Orders Screen" to display the current customer's open orders. Fields displayed on this screen include:

o customer ID

o customer name

o address

o contact person, and

o for each open order, the:

-- order number

-- ship date

-- ship to location

-- activity

-- date.

*<Profile>*. This verb calls the "History and Profile Screen" to display a detailed credit profile of the customer. Fields displayed on this screen include:

o customer ID

o customer name

o bill-to address

o credit limit

o type

o consolidation number

o contact person

o telephone number

o term codes

o date of last sale

o date account was opened

o date of the customer's last financial statement

o date of last trade payment report

o division for order

o total A/R balance

o total amount disputed

o total past due

o total charge backs

o risk code

o D&B number

o days slow.

This screen also lists the following fields for each month:

o month

o high credit

o percent discount

o percent slow net

o percent slow gross

o lst/most

o paydex and D&B.

*<Tag>*. This verb tags the current order from the list for future processing.

I98E: Purchasing Workstation

This Workstation calls the "PO Maintenance Screen" to display purchase orders. Fields defined on this screen are:

o purchase order number

o vendor ID

o date required

o user

o ship to location code and description. Verbs supported by this screen are:

*<sElect>*. This verb allows the user to enter purchase order selection criteria. After this data is entered, the matching entries will be selected and the screen will be populated with the data from these entries.

*<List-po's>*. This verb displays a pull down menu asking the user what type of purchase orders to list (open, closed or unfinished orders). Once the user selects one of these options, the "Purchase Orders Screen" is used to display the selected purchase orders. Fields listed on this screen are:

o purchase order number

o agency

o vendor ID

o destination location, and

o order status.

*<Print>*. This verb prints the purchase order shown on the screen.

**THE EXECUTIVE ANALYSIS PROCESS**

As certain work orders are completed, they update the Summary Statistics [I09E], tracking revenue, expenses, number of orders, quantity, etc. in terms of five basic areas:

o time

o locations

o agents

o work products

o commitments, i.e., contracts.

The system permits organizations to generate various "scenarios" to allocate quantities and to study the effects of various allocations. Each such scenario represents a set of rules for allocation of numbers such as overhead, losses, etc. in various ways over the actual numbers from operations. The rules of allocation for each scenario are written by management, and are recorded as data in the data structure in a similar way that the Work Protocol Rules are recorded as data.

Scenario analysis also permits users to make future projections based on past history, and to track expected supplies and demand on those supplies.

Based on the use of these Summary Statistics, executives may review the results of work at a number of different levels, and, armed with such data, to change work processes and other rules as desired. Since rules are generally represented as data, these changes can usually be made instantly without requiring software or data structure changes.

More specifically, the third objective according to the teachings of the invention is to permit organizations to accumulate the results of the work they manage and provide a wide range of "corporate metrics", such that executives can then decide whether to change their work processes and associated rules. Metrics currently supported in the preferred embodiment include scenarios for top-down cost accounting for "what if" analysis of revenues and costs (both direct and overhead costs) by customer, customer type, product, product type, time period, location, contract, and contract type. The teachings of the invention contemplate as many different types of "metrics" or scenarios as needed to accurately measure the performance of the organization. These scenarios contemplate specific rules recorded in data structure for allocation of various overhead expenses such as the president's salary in various ways to see the effects on company performance when evaluated in various ways.

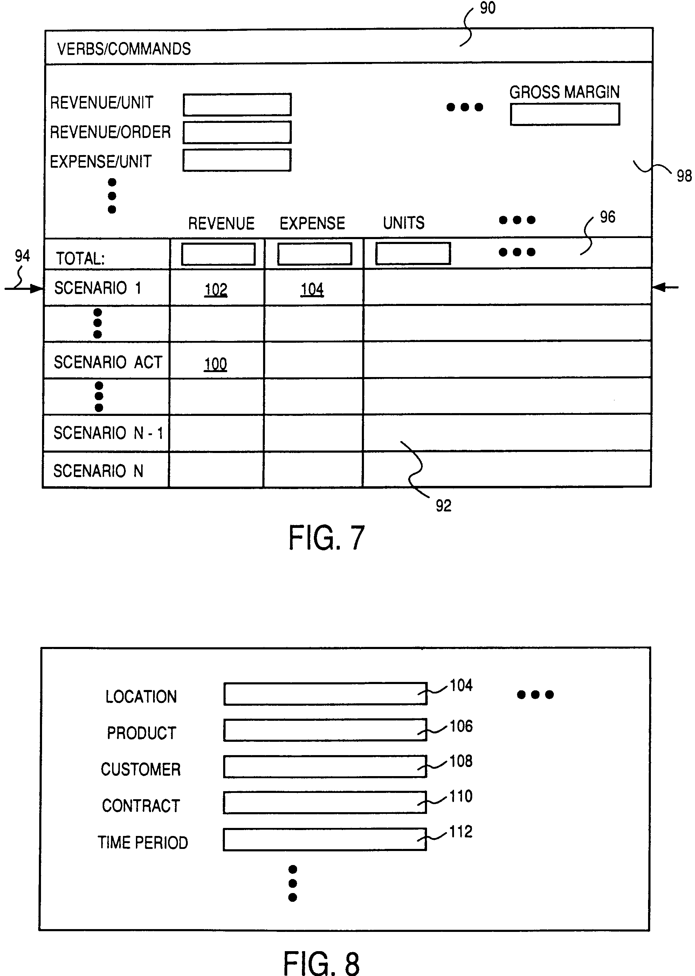

The results of the scenarios can be displayed on a screen for analysis, wherein an executive can select only certain scenarios of actual and allocated financial information for inclusion in calculations. An example of such a screen is shown at Figure 7.

Referring to Figure 7, the top portion 90 of this screen is the area where various verbs are displayed for use by executives to aid them is performing analysis of the performance of the company under various scenarios. Typically these verbs include a verb to select or "tag" scenarios of interest. This verb is invoked by pointing to a scenario of interest and then pointing to the verb. In the preferred embodiment, the keyboard arrow keys move a cursor up and down on a list of scenarios listed as rows in a two dimensional matrix shown at 92. As the cursor is moved over a scenario, the scenarios may be highlighted in some embodiments. In the preferred embodiment, there are two arrowheads that move up and down vertically to point at the scenario rows. These arrowheads are shown at 94. When a scenario is to be tagged, the arrow 94 is moved to the row of that scenario and the tag verb is invoked. When the tag verb is invoked, the entire scenario row is highlighted if it was not already highlighted. The tag verb is a toggle function that can also "unhighlight", i.e., turn off, a scenario that was already highlighted.

The executive analysis screen of Figure 7 also includes two other areas of interest. The first is area 96 where column totals for the columns of the two dimensional matrix 92 are displayed. Each column in the matrix 92 represents a predetermined quantity of interest in the preferred embodiment like revenue, expense, units etc. In alternative embodiments, the columns may be programmable by the user so that the user can program what types of data he is interested in seeing totalled in each column. The other area of interest is area 98 which shows summary numbers such as revenue per unit, revenue per order, expense per unit, gross profit margin etc. In the preferred embodiment, the summary numbers displayed are predefined quantities representing variosu predefined relationships between the column totals displayed in area 96. In alternative embodiment, the summary numbers could be programmable relationships defined by the user much like a spreadsheet. In such embodiments, the user might define column 1 as data type A and column 2 as data type B and defined a summary number in area 98 representing (A + B)/4, etc.

Each row of the matrix 92 represents one allocation scenario. Scenarios 1...N are shown in Figure 7. There can be as many scenarios as management wishes to define. One of the scenarios is always the actual operating data however. This scenario is represented by the Scenario Actual row in matrix 92. The contents of the Scenario Actual row represent the totals for actual data over the entire company operations. However, there are filter conditions that can be applied that limit the actual data included in the total. For example, if a company has a market consisting of the U.S. only and generated $1,000,000 in revenues for operations across the entire U.S., and no filter conditions were applied, the contents of cell 100 in matrix 92 would be $1,000,000. If however, the executive applied a filter condition saying in effect "give me revenues only for California customers" and revenues from California customers were $100,000, then the contents of cell 100 would be $100,000.

An example of the filter conditions than can be applied in the preferred embodiment is shown in Figure 8 which represents a filter conditions screen that pops up as an overlay each time the executive analysis screen of Figure 7 is requested and each time a verb in area 90 is invoked which indicates a desire on the part of the executive to do a new calculation. In Figure 8, the location line 104 represents an area where the user can type in filter criteria. In the previous example, to filter out all revenue derived from customers outside California, the user would enter "California" in line 104. Likewise, other filtering information could be entered in lines 106, 108, 110 and 112. In the preferred embodiment, the filter conditions shown in Figure 8 are the only filter conditions available, but in other embodiments, the filter conditions are programmable by the user. The filter conditions entered on the screen of Figure 8 are additive in that if more than one filter condition is entered, all filter conditions must be satisfied.

If there were no scenario rows in the matrix 92 other than the actual data scenario, the column totals shown in area 96 would represent the totals of only the actual data as screened by filter conditions, if any, entered on the filter conditions screen before the calculation was started. The various scenario rows alter the column totals when they are turned on, i.e., highlighted as having been previously selected and tagged. The contents of the cells of each scenario row are the allocation amount to be appended to a particular category, i.e., column, of actual data according to the allocation rules previously defined by management for that scenario. Thus, if, for example, the scenario I allocation rules were to allocate $100,000 of overhead expense over all actual expenses associated with filling orders from all customers weighted by sales volume to each customer, then the contents of cell 104 would be $100,000. The column totals shown in area 96 are simply the totals of all the highlighted or "turned on" scenario allocation entries in each column plus the data in the actual scenario row cell for that column. The entry of filter conditions will also control the portions of scenario allocations which are included within the column totals. For example, in the previous hypothetical case, the entry in cell 104 would be $100,000 if no filter conditions were active as that is the total amount to be allocated over all actual expenses. If a user then entered a "California only" filter condition on the screen of Figure 8, and the amount of the $100,000 allocated to actual expenses associated with only California customers was $10,000, then the amount shown in cell 104 would be $10,000. Thus, filter conditions affect the portions of each allocation which are displayed and which are added into the column totals.

The summary number shown in area 98 represent the calculation results of preprogrammed relationships between the current column totals in the preferred embodiment. As the filter conditions are changed, the column totals change. The changes in any of the column totals automatically are reflected in the summary numbers in area 98 which involves the changed column totals.

Each line of the matrix 92 represents one scenario which may represent one or more allocation rules for some number or numbers such as overhead items, losses, tax deductions or any other numbers.

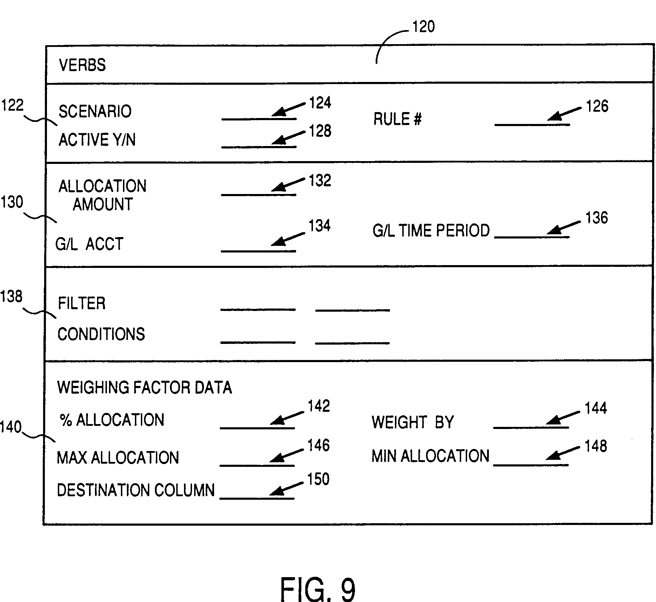

Referring to Figure 9, there is shown an example of an allocation rules screen through which management may define the allcoation rules of each scenario. The screen is divided into five subparts in the preferred embodiment. In section 120, verbs may be displayed such as add, change, delete, inquire, report etc.

Section 122 has fields therein where the user may enter the name of the scenario at 124. A rule number field at 126 allows the indivdual rules of a multiple rule scenario to be individually numbered. The field at 128 allows the scenario to be identified as active or not active in the sense that if this field contains a code indicating the scenario is inactive, it will not be listed on the list of scenarios which make up the rows of the matrix on the executive analysis screen.

Section 130 of the screen contains fields wherein data may be entered which defines the amount to be allocated. This amount can be entered directly by the user in field 132 or it may be indirectly specified by identification of a general ledger account at field 134 and a time period at field 136 which filters out for allocation use only data posted to the identified general ledger account during the period identified in field 136. Section 138 of the screen contains data fields wherein data may be entered with sets filtering conditions. These filtering conditions control which actual data records are available to have allocation amounts appended thereto. For example, the cost of a new manufacturing production line may be allocated over the sales history for products built on that line by setting filter conditions. Or management could set filter conditions to allocate regional advertising expenditures over the expenditures for marketing in that region.

Finally, section 140 contains fields wherein data may be entered to control the weighting of allocations. The % allocation field at 142 allows a maximum percentage to be set that will control the portion of a number to be allocated. This is most useful when a general ledger account is identified, and management wants to allocate only, for example, 50% of it. The Weight By field 144 contains data that defines the weighting function to use for weighted allocation. For example, if an overhead expense is to be alloated on a weighted basis to the expenses associated with a group of customers each of which has a different expense number associated with filling orders to that customer, the field 144 would typically contain a code such as E indicating that weighting of the amount set in block 130 is to be in proportion to expenses associated with each customer. Thus, a customer for which $400 of expense were incurred in filling his or her orders would receive twice as large an allocation as a customer with $200 of associated expenses. The Max and Min allocation fields, 146 and 148, respectively, contain data which constrain the maximum and minimum amounts that can be allocated to any particular account. Finally, the Destination Column field 150 contains data which indicates in which column of the scenario matrix on the executive analysis screen of Figure 7 to show the allocation amounts.

## DEFINITION OF THE WORK PROTOCOL RULES

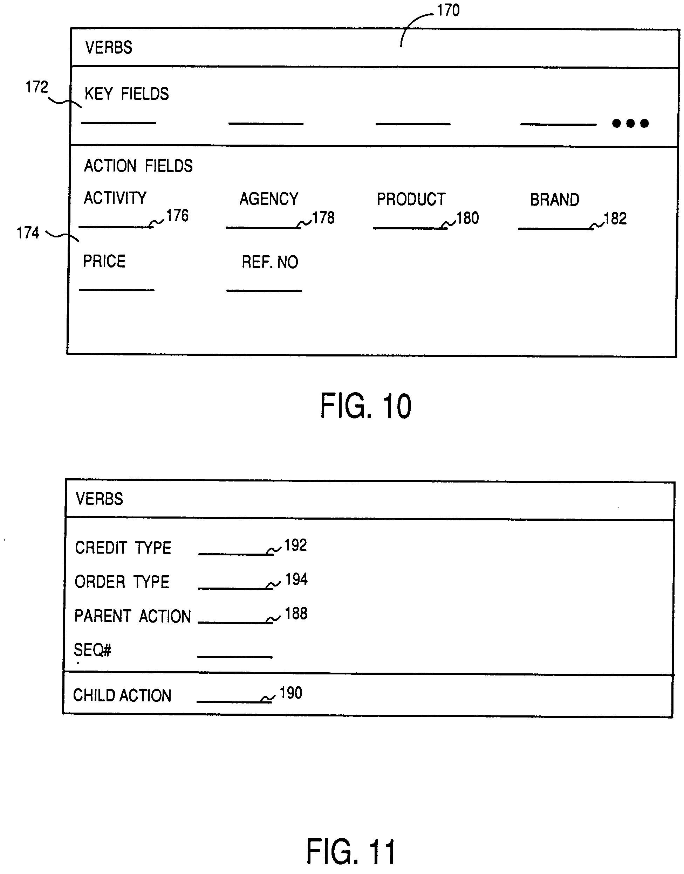

Referring to Figure 10, there is shown a screen used by management to enter data into the work protocol rules data structure stored in Block I45E. This screen has three subparts, the first of which is shown at 170 and which displays the standard Workbench verbs such as add, change, delete, etc. The second subpart is shown at 172 and includes fields which contain data which together define the key or conditions which must be satisfied before the action defined in the third subpart may be performed. The fields of the key define a number of conditions which are matched against the key fields of the meta-protocol entries to determine whether the implicit work order being defined by the screen of Figure 10 is to be culled from block I45 during the process of generating a series of implicit work orders from a particular explicit work order. For example, if the explicit work order is "ship 8,000 5-pound boxes of sugar to Safeway", the meta-protocol will map data from this explicit work order into a series of keys each of which is comprised of multiple fields. These keys generated by the processing of the meta-protocol are then used to extract implicit work order records from Block I45E. This is done by matching each key so generated against the keys for all the implicit work order records in block I45E. The key for each implicit work order record in Block I45E is defined by the entry of data by management in the fields shown in screen portion 172 in Figure 10.

The process carried out via the meta-protocol results in the selection of only implicit work orders needed to dictate the correct work steps that must be performed in order to get the work done that wwas requestd by the explicit work order(s). The implicit work orders so selected may contain implicit work orders which are not specific to the particular explicit work order being processed but which are implicit steps involved in performing the work of any explicit work order of the type being processed.

The third area of the screen of Figure 10 is shown at 174 contains the action fields that define the specifics of the work to be performed if the conditions of the key field are met. For the preferred embodiment, the action fields include an Activity code 176 identifying what type of work is to be done, an Agency code 178 indicating what type of agency is to do it, a Product code 180 indicating upon which product the activity code identified by the Activity code is to be performed, and a Brand code 182 indicating who the product was made by or for. Other fields may be used in alternative embodiments and additional fields are used in the preferred embodiment, but the above identified four fields are the most important fields. For a service industry embodiment, the activity codes actually used will usually be entirely different, although the data structure will be the same.

The screen of Figure 10 is used to generate the data defining all the implicit work orders in Block I45 for all possible work that may be performed by an organization in response to explicit requests for work.

## OPERATION OF THE SEQUENCER

As noted above, the processing by the meta-protocol results in the selection of only those implicit orders needed to accomplish the substeps necessary to satisfy a particular explicit work request. However these implicit work order records are culled from Block I45E in a more or less random order. These implicit work orders must still be sequenced. The job of the sequencer is to order the implicit work orders culled from Block I45E into the correct sequence using a data structure containing data entered by the user defining the correct order in which to do things. The data structure defining the correct order is generated by the user using the screen shown in Figure 11.

The screen of Figure 11 is divided into two subparts, the first of which contains multiple fields. Generally speaking, sequencing is done using only the activity codes of the universe of implicit work orders culled from Block I45E, because it is known that there are no implicit work orders in this universe which are not necessary to accomplish the work ordered by the explicit work order which caused this collection of implicit work orders to be selected in the first place. The activity codes define the correct sequence because it is known by management that certain activities need to be done before other activities in filling certain types of orders. For example, management may prefer that a credit check be done before picking of products out of inventory, and it is logical that picking must precede palletizing and shipping. This sequence is encoded by management into the data structure of Block I53E using the screen of Figure 11. In this screen, the Parent Action field 188 has an activity code entered therein by management indicating the activity type that must be performed before the activity type identified by a code entered by management into Child Action field 190. By making a series of such entries, management may define the desired sequence in which various activities are to be performed.

The sequencer process looks at the data in Block I53E and determines from the Parent Action and Child action codes stored therein a tree structure defining the order in which things are to be done. Note that any Parent Action code may have several Child Action codes and vice versa. The sequencer then can use these activity codes to define a genus comprised one or more different sequences each of which has at least some common characteristics. The Credit Type field 192 and Order Type field 194 are used to enter data which define different species within this genus since credit type and order type may, in management's view, affect the correct order in which things are done.

## DETAILED DESCRIPTION OF THE WORK ORDER GENERATION PROCESS

Referring to Figure 12, there is shown a diagram of the processing that maps the attributes of a stimulus work request to a listing of records defining the appropriate response to the stimulus work request using hypothetical file structures and file contents for a product distribution organization. The processing symbolized by Figure 12 is intended to be carried out in a programmed digital computer. In Figure 12, the stimulus, in the hypothetical example, an explicit work request, is shown at 200, Figure 12A. This work request has a plurality of attributes specified by the contents of the fields CUST, PROD, QTY, and DATE. In the hypothetical example given, the explicit work request 200 represents an order from customer A of product X in the quantity 100 to be shipped on 5/10.

The first step performed by the computer system after receipt of the explicit work order is to compute a breakpoint mask or filter condition to be used in formation of the key by the meta-protocol. The software according to the teachings of the invention computes a breakpoint using the quantity field contents of the explicit work order. This is done in the preferred embodiment by reading the product ID from the explicit work order and accessing the Product Master Data [I01E] and obtaining the weight per unit of issue data which gives the weight of a single unit of issue. This data is then used with the quantity information from the explicit work order to calculate the weight of the order. This calculated weight is then used in accessing a Breakpoint Data [I11E]. This access involves sequentially reading all the records in ,the Breakpoint Data and determining where in the breakpoint schedule the order falls. In the hypothetical example, assume that the weight per unit of issue is one pound. In this case, the weight of the order is 100 x 1 = 100. This data is compared to the weight ranges in the Breakpoint Data 202, Figure 12B, and the software determines that the order falls in the breakpoint G range. G will therefore be used in forming the mask or filter key used to select records from the Work Protocol Rules [I45E].

Of course this specific methodology is specific only to the specific emobodiment in the code of the Appendices. The teachings of the invention however contemplate broader application to many different types of products and other business situations. For example, some organizations may have breakpoints based on units ordered and other organizations may have breakpoints based upon some other criteria or combinations of criteria. In fact, some organizations may not have any breakpoints at all. The use of breakpoints and the above described breakpoint processing is not critical to the invention, and may be eliminated or calculated in other ways.

After the breakpoint is calculated, if it is calculated, the system is ready to begin forming the first filter or mask key using the meta-protocol data stored in the System Control File [Z00B]. The contents of the data records of a typical hypothetical meta-protocol are shown in Figure 12C. The meta-protocol data records in Block Z00B contain codes which are used to map or transform or translate the specific contents of the attributes of the explicit work order into a key used to filter out or select records from the Work Protocols Rule [I45E] shown in Figure 12G. In the preferred embodiment, the meta-protocol contains codes to translate or map only 5 of the 47 attribute fields of the explicit work order into 10 fields of a mask or filter key. In the hypothetical example given in Figures 12A-12G, the meta-protocol records map only 2 of the attribute fields of the explicit work order to a five field key. This process is done as follows.

Referring to Figure 12C, the meta-protocol in the hypothetical example is made up of three data records. Each record has two fields, the contents of each being one of a group of mapping or translation codes. The currently defined mapping or translation codes in the preferred embodiment are: an "exact match" code (∗); an ignore code (a blank); a "yes/no" code (Y or N) for the Order Type attribute in the explicit work order and the computed Breaklevel attribute fields only (where computed break levels are used); or any of a plurality of attribute codes used to access one or more network data structure which classify specific entities into more general classes. The order type attribute field is used in the preferred embodiment, but is not used in the hypothetical example. These mapping codes have the following meanings in the preferred embodiment: ∗ = exact match required between the attribute field in the explicit work order and the corresponding key field of the record in Block I45E; blank = both the attribute field in the explicit work order and the corresponding key field in the Work Protocol Rules [I45E] record must match and be blank; Y = same as ∗ for order type and break level fields only; N = same as blank for order type and break level fields only; attrib code = use contents of network data structure matching a key comprised of the attribute in the corresponding field from the explicit work order concatenated with the attrib code listed in the corresponding field of the meta-protocol as the corresponding field in the resulting mask or selection filter key. Of course, in alternative embodiments applied to other types of business or other organizations, other groups and types of mapping or translation codes may be used with different meanings.

As an example of how this mapping process works, consider the hypothetical data structure as populated with the values depicted in Figures 12A through 12H. In the meta-protocol of Figure 12C, three fields are used corresponding to the CUST and PROD attribute fields of the explicit work order 200 and a BREAKPOINT field corresponding to the computed breakpoint described above. The first data record of the meta-protocol 204 is row 1. The ∗ in the CUST field, the blank in the PROD field, and the Y in the BREAKPOINT fields will map to a mask or selection filter key requiring any selected record from the Work Protocol Rules block I45E (figure 12G) to have, respectively: an exact match between the explicit work order CUST field and the CUST field in selected record, i.e., customer = A; the selected records from the I45E block must have a blank in the product field; and an exact match between the computed breakpoint level and the BRK field of the selected record from the I45E block. The three field key which results from the operation of the first meta-protocol data record is therefore, A, blank, G.

This key is then passed to the integrated functional routines of the Ultra-Structure Workbench with a read request. The read request is passed to the file handler of the operating system which checks an index file for Block I45E which is generated by the operating system after or as management types in the data records of the Work Protocol Rules [I45E]. The operation of the index file and its sorted order in ASCII sort sequence are well understood by those skilled in the art. In the hypothetical example, the key of each data record in the Work Protocol Rules [I45E] is comprised of 5 fields, the other two being the COMMIT field and the SEQ field. The key passed to the file handler with the read request contains only 3 of these five fields. The operation of the file handler is well known to those skilled in the art, but basically, it will return a "not found" message because the selection filter conditions or key passed to it in the read request (A, blank, G) does not match the full key of any record in Block I45E. The closest key is A, blank, G, J, 1 for record 3, but the selection filter key A, blank, G does not contain the J and 1 contents of the COMMIT and SEQ fields of record 3. The file handler will place the pointer in the index file corresponding to the I45E file just above the index record in the ASCII sort sequence corresponding to record 3 of I45E. The software according to the teachings of the invention will then issue a "read next" command which will result in the file handler returning the entirety of record 3 including the key fields.

At this point in the process, the software according to the teachings of the invention must determine if there is a full match of all key fields before record 3 is actually accepted as part of the protocol. This process involves reading the contents of the COMMIT key field from record 3 and then accessing the Commitments Data [S20E] symbolized by the hypothetical data structure shown in Figure 12D. In the hypothetical example, the contents of the commitment field of record 3 are J which matches the commitment ID of record 1 of the Commitments Data [S20E]. The data record for commitment J indicates that the valid dates of this commitment are from 5/1 to 5/31. The software then reads the contents of the DATE field from the explicit work order and compares that date (5/10) to the start and end dates of the commitment. In this example, the date is within range, so the software proceeds to strip out the key fields of record 3 and write the remaining action fields to storage as record 1 of the protocol shown in Figure 12H. The action fields are the fields to the right of the double vertical line 206 in Figure 12G. These fields are written as the first implicit work order data record in the protocol or collection of implicit work orders which results from the processing of the explicit work order 200 using the meta-protocol 204. The only use of the contents of the SEQ key field in the I45E Work Protocol Rules records is to prevent more than one record from having the same key.

Upon return of record 3, the software of the invention will issue another "read next" command which will result in the next record being returned. The software will compare this with the search filter to ensure that it matches the key A, blank, G in the CUST, PROD and BRK fields. Since it no longer matches, it triggers the software according to the teachings of the invention to proceed to the next meta-protocol record and form a new filter.

The second meta-protocol record will result in a filter or key which requires an exact match in the CUST and PROD fields and an exact match in the BRK or breakpoint field. Given the contents of the explicit work order fields, this meta-protocol record coding will result in a mask or selction filter key of A, X, G. When this filter is passed to the file handler, the file handler will position the pointer in the index file above the first record in the ASCII sort sequence records listed there which matches these three conditions in the CUST, PROD and BRK fields and then return a "not found" message because the selection filter or key does not contain the J and 1 of the COMMIT and SEQ key fields. Assume that record 1 in Block I45E corresponds to the first record in the ASCII sort sequence records in the index file which matches the three key fields generated or mapped by the second meta-protocol record. Upon receipt of the "not found" message, the software according to the teachings of the invention will send a "read next" command which will cause the file handler to return all of record 1 of I45E. The software then reads the contents of the COMMIT field and compares it as described above to the commitment file records and the contents of the DATE field of the explicit work order 200. In the example given, there is a match, so the software strips out the key fields of record 1 and writes the remaining action fields as record 2 of theprotocol file shown in Figure 12H. Note that the quantity field QTY of the protocol record is filled in by the software from the contents of the QTY field of the explicit work order. The reason for this is that the Work Protocol rules stored in block I45E do not contain quantities since the rules usually are not quantity dependent, although in some cases or in alternative embodiments, the quantity of an order may affect the contents of the protocol.

The software then issues a "read next" command to the file handler which returns the contents of the next record in Block I45E corresponding the next record in the index file in ASCII sort sequence corresponding to Block I45E. Assume that this corresponds to record 2 in the I45E block. The software will again compare the contents of the COMMIT field of the returned record to the commitment file and the DATE field of the explicit work order. In the example, the content of the COMMIT field of record 2 is commitment K. The commitment file indicates for commitment K that this commitment is valid only from 6/1 to 6/30, while the DATE field of the explicit work order is 5/10. Since there is not a match, the contents of record 2 are discarded and nothing is writtent to the protocol of Figure 12H.

Next, the software again issues a "read next" command. However, since there are no further records which match the selection key A, X, G assembled by the second meta-protocol record, the file handler returns a "not found" message. This triggers the software to go to the next meta protocol record and assemble a new selection filter or key.

The third meta-protocol record is coded with two attribut codes VMC and TYPE, and a yes/no code. The attribute code VMC in the CUST field causes the meta-protocol software to assemble a selection key with which to access the customer network data structure a hypothetical example of which is shown in Figure 12E. This selection key will be the concatenation of the content of the CUST field of the explicit work order 200 and the attribute code VMC, i.e., the vertical market code. This selection key A, VMC is sent to the file handler with a read request to read the index file for the customer network data structure stored in block S18E. This access will ultimately return the contents of record 1 of the S18E block shown in Figure 12E. This record indicates that customer A has a vertical market code Fed. Thus, the software carrying out the meta-protocol process will set the first field of the third selection filter or key to Fed.

The meta-protocol software then examines the contents of the PROD field of the third meta-protocol record and determines the code there is an attribute code TYPE. The software then formulates a selection filter for access to a product network by concatenating the contents of the PROD field of the explicit work order, i.e., product X, with the attribute code TYPE. The resulting selection key X, TYPE is passed to the file handler with a request to read the product network data structure block I02E. This will result in the return of record 1 of this data structure indicating that product X is of type Liq or liquid. The software then will use Liq as the second field in the selection field being assembled using the meta-protocol record. The breakpoint value G will be computed as described above. Thus, the resulting key mapped by the third meta-protocol record will be Fed, Liq, Blank because the N or no code exists for the BREAKPOINT field of the third meta-protocol record.

This selection filter or key generated by the third meta-protocol record will then be passed to the file handler with a read request to read the I45E block. This read will result in a "not found" message and the pointer will be placed in the index file just above the closest index file record in the ASCII sort sequence. In the example, this record will correspond to record 4 in block I45E. The software will then issue a "read next" command which will result in the return of record 4 of the I45E block.

Next, the software will read the contents of the COMMIT field of record 4 and process it as above to verify that the rule encoded in record 4 is valid for the date of 5/12 encoded in the explicit work order 200. Finding that it is, the software will then strip out the key fields and write the action fields of record 4 to the protocol being assembled in the computer's memory as symbolized in Figure 12H. The result will be the implicit work order shown as record 3 in Figure 12H.

The software then issues a "read next" command which results in return of the "not found" message since no other records in I45E match the selection filter or key Fed, Liq, Blank. This triggers the software to look for the next meta-protocol record. Finding none, the software is triggered to invoke the collision detection and compression processing described earlier herein with reference to Figure 4.

In general, the meta-protocol data structure is populated so as to proceed from the specific to the general. That is, specific conditions that supersede general conditions should be listed first so that the general conditions which result in the same implicit work orders being selected will lose in collision contests. This allows, for example, specific deals made in committments to specific customers to supersede any general deals made for all customers in a class to which that specific customer belongs.

## DESCRIPTION OF THE ORDER CHANGER FUNCTION

Orders, whether started or not, may change when a customer calls to increase, decrease, or otherwise change previous explicit work orders. To determine the net effect change in work necessitated by said later modifications, the Order Changer uses the same protocol masking, filtering, and meta-protocol process as do original explicit work orders. The only difference is that when the order changer accesses the protocol and related files, it does so with a "delta quantity" (the difference between the original explicit work order and the new, changed work order). For each protocol record selected from the protocol, the order changer determines the unstarted or finished state of the original implicit work orders. The order changer then generates new implicit work orders as necessitated by the differences between the origional and the changed work orders, and, if new implicit work orders are necessary, merges the new implicit work orders into the existing implicit work orders. This merging process involves, for example, finding an unexecuted pick order in I07E which specifies a pick of 50 items and changing it to 75 items when the change order is for an additional 25 items and the original order was for 50 items. If the pick order has already been executed, then the order changer software process automatically generates a new implicit work order to pick 25 of the ordered items and stores the new implicit work order in block I07E.

If the customer changes the product identification, the delta quantity is treated as a cancellation of the entire order and entry of a new order. The implicit work orders generated from the original explicit work order are processed by deleting any implicit work orders not yet marked as completed. Implicit work orders marked as having already been completed are used by the system to generate new implicit work orders that essentially undo the work performed under the original implicit work orders. The new explicit work order with the changed product identity is treated as a new work order and an order entry clerk, after having entered the change order, then enters a new explicit work order. The new explicit work order then is used to generate a new protocol in the manner described herein.

If the customer changes the date in the explicit work order, in the preferred embodiment, the change can only affect the content and sequence of any subprotocol not already loaded. Any subprotocols already loaded are therefore not changed. However, in alternative embodiments, the change in date can be treated as the cancellation of the original order and the entry of a new explicit work order. In other alternative embodiments, the already loaded protocols can be changed in the same manner as the process described above for a change in the product identity. As an example of the operation of the preferred embodiment, assume that a protocol is comprised of four subprotocols, A, B, C and D and that the date affects only the content and/or sequence of subprotocols A and C. Assume also that the only subprotocol loaded at the time of the change in date is subprotocol A. The date change will not affect the content or sequence of subprotocol A, but it will change the content and/or sequence of subprotocol C. Since subprotocols B and D are not affected by the date at all, they will not be changed by the change in date.

The order changer can delete any implicit work orders that had been finished (either an entire line in the case of a cancellation, or a pro-rated amount if just a quantity is changed). In the preferred embodiment, there is a default process whereby when an executed implicit work order is to be reversed, the same implicit work order is automatically generated and merged into the I07E block with the same quantity with a minus sign in front of it. Alternatively, or in addtion, each activity can be networked so as to indicate some other form of inversion or reversal steps for the original implicit work order. In other words, the order changer determines the origional activity in a normal manner but then can either (a) generate the inverse activity by determining that activity in the network, or (b) re-issue the same activity with a negative number if there is a negative ("-") sign indicated in the network.

If an implicit work order wasn't finished (whether it was unavailable or available), it is simply cancelled (if the corresponding explicit work order was cancelled) or adjusted (if the corresponding explicit work order was adjusted).

The inverse of an activity is determined by an entry in the Product Network Data [I02E]. In the preferred embodiment, the activity is concatenated with the "INVRSE" attribute code, and the product network entry is read using that concatenated key:

   o If no such network entry exists, the inverse of the activity is assumed to be the same as the activity, but with a negative quantity. The order changer will create a new implicit work order for such a case, using the original activity and a negative quantity.

   o If the network entry exists, but specifies a blank inverse activity, the original activity does not need to be reversed (e.g. messages), and no new implicit work order is required.

   o If the network entry exists, and specifies an inverse activity, the Order Changer creates a new inverse activity which is loaded as a new implicit work order.

## ALTERNATIVE EMBODIMENTS

Although the invention has been described in terms of the preferred and various alternative embodiments disclosed herein, those skilled in the art will appreciate various alternatives which may be made which do not depart from the true spirit and scope of the invention defined by the claims below. All such alternative embodiments which use work protocol rules embedded in data and which generate implicit work orders from explicit work orders using the rules recorded by management in such data are intended to be included within the scope of the claims appended hereto.

Although the preferred embodiment of software according to the teachings of the invention appended hereto is optimized for use with a business for shipping food products such as sugar, the teachings of the invention are broadly applicable to any complex situation wherein a computer would be helpful in analyzing the attributes or components of an external stimulus and formulating and outputting a listing of the steps of an appropriate response based upon rules encoded in a data structure. For example, the teachings of the invention could also be applied to management of a refinery or nuclear power station, control of the complex systems of large vessels or aircraft, relief effort organizations and nonprofit institutions.

There are also a variety of alternative embodiments which produce sub-optimal results and which do not utilize all the novel features incorporated in the teachings of the invention. Examples are as follows:

An alternative uses the key factors in the stimulus (for example, five critical fields used as a basis for determining an appropriate response) and, instead of examining them in various combinations in parallel, as the preferred embodiment does, examines them serially, wherein each factor could be applied against condition-action rules and, when a hit occurred, could fire the rule and thereby trigger a request for the next factor.

Another alternative uses the key factors in the stimulus (for example, five critical fields used as a basis for determining an appropriate response) and, instead of requiring that all factors in the mask thereby generated are matched, could require that only N out of M factors be matched in a type of "fuzzy logic" response. As a subalternative, the stimulus factors or attributes are "weighted" and a minimum weight or convergence threshold is specified to fire the rule and thereby indicate a new implicit work order.

Another alternative embodiment requires predefinitions of all possible permutations of the key factors in the stimulus (for example, five critical fields used as a basis for determining an appropriate response and all the ways in which they could possibly be classified) and, instead of defining responses to different combinations as data records in the Work Protocol Rules, defines responses largely in the software. As a subalternative, some options are defined as data "parameters" where the user selects, within a very limited range specified in the software, the trigger conditions and/or the responses thereto.

None of these alternative embodiments constitutes a preferred embodiment of the teachings of the invention, but they fall within the scope of logically and technically possible alternative ways of moving from complex stimuli to complex response.

## Claims

1. An apparatus for assisting in the management and operation of any type of organization, comprising:

a computer having a central processing unit, memory, a mechanism for inputting data, a device for data storage, and a device such as a display for feedback to a user;

a program or group of programs controlling the operations of said computer comprising:

means for receiving explicit work orders;

means for generating implicit work orders from said explicit work orders by accessing a data structure or data structures which store work protocol rules as data, said work protocol rules defining the desired behavior of the organization; and

means for providing access to said implicit work orders to the appropriate agencies.

2. The apparatus of claim 1 wherein said computer program or programs further comprises means for providing access to said data structure such that the work protocol rules may be stored as data, said work protocol rules defining the desired behavior of the organization and which define which implicit work orders to generate upon receipt of each type of explicit work order.

3. The apparatus of claim 1 wherein said computer further comprises a display and wherein said program or programs further comprise means for displaying an explicit work order entry screen and means for receiving data entered by the user in response to display of said explicit work order entry screen and interpreting said data entered by said user as an explicit work order and generating implicit work orders therefrom.

4. The apparatus of claim 1 wherein said program or programs further comprise means for self-generating explicit work orders and for processing said self-generated explicit work orders exactly as other explicit work orders are processed.

5. The apparatus of claim 1 wherein said program or programs further comprise means for storing and retrieving meta-protocol records and for using said meta-protocol records to process said explicit work orders by retrieving only the data embodying the appropriate work protocol rules and generating said implicit work orders therefrom.

6. The apparatus of claim 1 wherein said program or programs further comprise collision detection means for detecting when two or more duplicate implicit work orders are generated from the same explicit work order and for accepting and keeping only the first such duplicate implicit work order generated.

7. The apparatus of claim 1 wherein said program or programs further comprise means for generating a plurality of implicit work orders across a plurality of said explicit work orders and for tagging each implicit work order with a compressibility flag indicating, in the case of duplicate implicit work orders, whether the work activity directed by each said implicit work order needs to be performed as many times as there are appearances of this implicit work order, or whether the work activity directed by said duplicate implicit work orders needs to be done only once.

8. The apparatus of claim 7 wherein said computer program further comprises means for compressing said implicit work orders generated across a plurality of said explicit work orders by detecting the presence of duplicate implicit work orders generated across a plurality of explicit work orders and for checking the compressibility flags of all such duplicate implicit work orders and eliminating all implicit work orders indicated by their compressibility flags to be directing work activity that does not have to be done once for each appearance of such an implicit work order.

9. The apparatus of claim 6 wherein said program or programs further comprise means for generating a plurality of implicit work orders across a plurality of said explicit work orders and for tagging each implicit work order with a compressibility flag indicating, in the case of duplicate implicit work orders, whether the work activity directed by each said implicit work order needs to be performed as many times as there are appearances of this implicit work order, or whether the work activity directed by said duplicate implicit work orders needs to be done only once.

10. The apparatus of claim 9 wherein said computer program further comprises means for compressing said implicit work orders generated across a plurality of said explicit work orders by detecting the presence of duplicate implicit work orders generated across a plurality of explicit work orders and for checking the compressibility flags of all such duplicate implicit work orders and eliminating all implicit work orders indicated by their compressibility flags to be directing work activity that does not have to be done once for each appearance of such an implicit work order.

11. The apparatus of claim 10 wherein said program or programs further comprises means for storing all implicit work orders left after said means for collision detection and said means for compressing perform their functions of eliminating some of said implicit work orders.

12. The apparatus of claim 11 wherein said program or programs further comprises means for storing and accessing sequence data, said sequence data defining the order in which said implicit work orders are to be performed, and for tagging implicit work orders with a status field indicating whether the implicit work order is in an available-to-be-performed status or an unavailable-to-be-performed status in accordance with said sequence data and for releasing only said implicit work orders that are in an available-to-be-performed status such that implicit work orders are performed in the correct sequence.

13. The apparatus of claim 12 wherein said program or programs further comprises means for receiving data regarding when work directed by said implicit work orders has been completed and for updating the status fields of the next implicit work orders in the sequence defined by said sequence data from unavailable-to-be-performed to available-to-be-performed.

14. The apparatus of claim 1 wherein said computer includes a display, and further comprising means for providing decision support to workers in said organization comprising:
   o means for displaying a selected one of a plurality of decision screens, and
   o means responsive to any one of a number of different verb commands for displaying a selected decision support screen or screens in response to entry by a user of a verb command associated with each decision support screen or screens, said decision support screens containing information which aid workers in gaining information necessary to do the work directed by said implicit work orders.

15. The apparatus of claim 14 wherein said computer program or programs further comprise means for responding to a finish verb indicating work directed by an implicit work order has been completed, and for accessing the next implicit work order in the sequence defined by said sequence data and releasing said next implicit work order to direct the work defined therein be completed next.

16. The apparatus of claim 1 further comprising decision support means for displaying any of a plurality of decision screens, each said decision screen including a list indicating at least some of the work to be done, said decision support means further comprising means for responding to any of a predetermined set of commands to display additional information needed by a user of said decision support screens in order to accomplish the work listed on said decision support screen.

17. The apparatus of claim 16 wherein said means for responding responds, for each particular decision support screen, to a unique set of commands associated with that particular decision support screen, each said set of unique set of commands, when invoked, causing said means for responding to display information particularly suited to assist the user to accomplish the work listed on said particular decision support screen.

18. The apparatus of claim 16 wherein each said decision support screen has a particular class of agencies which are entitled to use each said decision screen, and wherein said means for displaying said decision screens includes means to check the identity and authorization privileges of agencies requesting access to particular decision screens and for blocking access to decision screens requested by agencies not having the appropriate access privileges.

19. The apparatus of claim 17 wherein each said decision support screen has a particular class of agencies which are entitled to use each said decision screen, and wherein said means for displaying said decision screens includes means to check the identity and authorization privileges of agencies requesting access to particular decision screens and for blocking access to decision screens requested by agencies not having the appropriate access privileges.

20. The apparatus of claim 16 wherein said means for displaying said decision screens includes means for responding to invocation of a finish command indicating a particular item of work has been finished and wherein said program includes sequencer means for sequencing said implicit work orders in the correct sequence to get the desired work done in a particular order, and wherein said means for responding to said finish command includes means for communicating said finished status to said sequencer means, and wherein said sequencer means includes means to determine the next implicit work order or work orders to be done in the desired sequence and to distribute said next implicit work orders to the appropriate agencies.

21. The apparatus of claim 17 wherein said means for displaying said decision screens includes means for responding to invocation of a finish command indicating a particular item of work has been finished and wherein said program includes sequencer means for sequencing said implicit work orders in the correct sequence to get the desired work done in a particular order, and wherein said means for responding to said finish command includes means for communicating said finished status to said sequencer means, and wherein said sequencer means includes means to determine the next implicit work order or work orders to be done in the desired sequence and to distribute said next implicit work orders to the appropriate agencies.

22. The apparatus of claim 18 wherein said means for displaying said decision screens includes means for responding to invocation of a finish command indicating a particular item of work has been finished and wherein said program includes sequencer means for sequencing said implicit work orders in the correct sequence to get the desired work done in a particular order, and wherein said means for responding to said finish command includes means for communicating said finished status to said sequencer means, and wherein said sequencer means includes means to determine the next implicit work order or work orders to be done in the desired sequence and to distribute said next implicit work orders to the appropriate agencies.

23. The apparatus of claim 18 wherein said means for displaying said decision screens includes means for responding to invocation of a finish command indicating a particular item of work has been finished and wherein said program includes sequencer means for sequencing said implicit work orders in the correct sequence to get the desired work done in a particular order, and wherein said means for responding to said finish command includes means for communicating said finished status to said sequencer means, and wherein said sequencer means includes means to determine the next implicit work order or work orders to be done in the desired sequence and to distribute said next implicit work orders to the appropriate agencies.

24. The apparatus of claim 19 wherein said means for displaying said decision screens includes means for responding to invocation of a finish command indicating a particular item of work has been finished and wherein said program includes sequencer means for sequencing said implicit work orders in the correct sequence to get the desired work done in a particular order, and wherein said means for responding to said finish command includes means for communicating said finished status to said sequencer means, and wherein said sequencer means includes means to determine the next implicit work order or work orders to be done in the desired sequence and to distribute said next implicit work orders to the appropriate agencies.

25. The apparatus of claim 1 wherein said program or programs further comprise scenario means for storing as data one or more scenarios comprised of one or more allocation rules for allocation of any type of quantity such as overhead expenses, additional revenues etc. to various accumulated actual data indicative of the state of organizational operations, and for making and outputting the results of predetermined calculations defined by said scenario rules for analysis.

26. The apparatus of claim 25 wherein said scenario means further comprises analysis means for displaying an executive analysis matrix comprised of one or more columns each of which represents a particular quantity of interest to management and one or more rows, each of which represents a different scenario with associated allocation rules where the contents of each row of said matrix represent the allocation amounts for that column according to the allocation rules for that scenario's row.

27. The apparatus of claim 26 wherein said analysis means includes means for allowing more than one scenario row to be tagged at any particular time and for displaying for each column a total showing the totals for that column of all the scenario rows that are tagged and excluding numbers from any scenario row that is not tagged.

28. The apparatus of claim 27 wherein said analysis means includes means for calculating and displaying summary numbers which are numbers representing selected ratios between said column totals and/or numbers bearing a selected mathematical relationship to one or more of said column totals.

29. The apparatus of claim 28 wherein said analysis means includes means for allowing a user to define the desired mathematical relationship between some or all of said summary numbers and selected ones of said column totals.

30. The apparatus of claim 25 wherein said scenario means includes filter means for providing a facility whereby a user can select one or more filter conditions which cause said scenario means to make said predetermined calculations only upon data which meets said filter conditions.

31. The apparatus of claim 25 wherein said scenario means includes means for performing the following calculations:

o a basic calculation wherein the actual data pertaining to each of one or more quantities of interest resulting from actual operations are calculated;

o an allocation calculation wherein a number or numbers supplied by a user wishing to define a scenario is allocated over said actual data according to one or more allocation rules also supplied by said user;

o an executive analysis calculation wherein said quantities of interest are calculated using the actual data and allocated data according to one or more selected scenarios, and further comprises means for outputting the results of said executive analysis calculation.

32. The apparatus of claim 31 wherein said means for outputting displays an executive analysis screen which includes a two dimensional matrix, where said quantities of interest are the columns and wherein each separately defined scenario is a row, and wherein the contents of any row and column location in said matrix represents either the total of the actual data for the quantity of interest corresponding to that column for a scenario representing only the actual data with no allocations, or the total allocation to that quantity of interest according to the allocation rules defined by the scenario corresponding to that row.

33. The apparatus of claim 32 wherein said executive analysis calculation means includes means for calculating column totals for each quantity of interest by application of filter criteria defined by a user.

34. The apparatus of claim 32 wherein said executive analysis calculation means includes means for calculating column totals for each quantity of interest and for calculating selected summary numbers representing selected ratios between said column totals or other mathmatical relationships between one or more of said column totals.

35. The apparatus of claim 34 wherein said executive analysis calculation means includes means for applying first and second user defined filter criteria before performing said calculations, said first filter criteria causing selection of only certain actuals data meeting said first filter criteria for allocating specified amounts over for subsequent inclusion in said column totals, and said second filter criteria causing selection of the contents of only certain scenario rows which meet said second selection criteria for inclusion in said column totals and said summary numbers.

36. The apparatus of claim 35 wherein said selected ratios and/or mathmatical relationships are programmable by a user.

37. An apparatus for generating implicit requests from explicit requests, comprising:

o a computer having an input device to receive explicit requests and an output device to output implicit requests and a memory for storing data; and

o a data structure storing data that defines mapping rules which define the implicit requests which are inherently part of each possible type of explicit request; and

o a computer program which guides the operations of said computer for processing explicit requests and mapping each explicit request to one or more implicit requests by accessing the appropriate mapping rules from said data structure.

38. An apparatus for outputting data in response to any of a plurality of external stimuli, each said stimuli having a plurality of individual attributes which define the nature of the stimulus, comprising:

o a computer having an input device for receiving each said external stimulus;

o a data structure or data structures having encoded therein rules for appropriate response to each said stimulus;

o a computer program controlling the operations of said computer including code for examining the attributes of each said external stimulus in an order defined by data in said data structure and for creating one or more selection keys therefrom and for using said selection keys to select zero or more responses to said stimulus from said data structure, and including code for organizing said selected responses into a sequence of one or more data items defining the appropriate sequence of responses for responding to said external stimulus based upon data defining the appropriate sequence stored in said data structure or structures.

39. The apparatus of claim 38 wherein said data structures includes data defining networks which classify a plurality of critical attributes of said individual external stimuli into one or more more general classes, and wherein said computer program further comprises code for creating said selection keys based upon both the individual attributes of each said external stimulus and the more general class of stimuli to which the individual stimulus belongs, if any, as defined by appropriate network data stored in said data structure, and for using said keys for selecting all appropriate response or responses to said stimulus including responses to stimuli in the same general class as said individual stimulus being responded to.

40. A process for using a computer to generate data to aid in responding to an external stimulus having a plurality of attributes, comprising:
   o receiving an external stimulus;
   o generating a sequence of one or more selection filters by mapping the attributes of said external stimulus into said sequence of one or more selection filters using a sequence of one more meta-protocol data records in a data structure containing codes which define the nature of the mapping;
   o matching each said selection filter to the key of each data record in a work protocol rules portion of a data structure containing one or more rules encoded in data, each said rule having one or more data fields having contents which define conditions which characterize said key and one or more data fields the contents of which define an appropriate response to take if the conditions of said key are met, and selecting records from said work protocol rules portion of said data structure which have keys which match said selection filters to generate a response to said stimulus; and
   o outputting said response.

41. The process of claim 40 wherein said step of matching said sequence of selection filters further comprises matching, in the sequence in which said selection filters were generated, each said selection filter against all appropriate data records in said work protocol rules data structure.

42. The process of claim 40 further comprising the steps of processing said protocol by sequencing said selected data records into a sequence defined by other data in said data structure.

43. The process of claim 41 further comprising the steps of processing said response before output by eliminating duplicate responses which can be eliminated and minimizing the number of occurrences of other duplicate responses that can be minimized and then sequencing the responses into a sequence defined by sequence data stored in another portion of said data structure.

44. The process of claim 40 wherein said data structure contains network data which generalizes said stimuli into an unlimited number of more general classes, and wherein said generating step using said meta-protocol rules includes the steps of mappping the attributes of said stimulus being responded to by using one or more of said attributes in said stimulus and one or more codes in said meta-protocol to access said network data records and using said network data records to generate one or more of said selection filters so as to select all rules from said work protocol rules portion of said data structure which meet said selection filter conditions.

HOST COMPUTER

CORE → ULTRA STRUCTURE WORKBENCH ~14

~12

~10

OPERATING SYSTEM ~16

NETWORK INTERFACE ~24

FILE SERVER ~26

NETWORK / SHARED MEMORY ETC. ~22

18~ WORKSTATION 1 • • • WORKSTATION N ~20

## FIG. 1

DEFINE ORGANIZATION BEHAVIOR AS WORK PROTOCAL RULES IN DATA FILES ~30

ENTER EXPLICIT WORK ORDERS ~32

CORE CHECKS WORK PROTOCOL RULES TO GENERATE IMPLICIT WORK ORDERS AND WRITE TO FILE ~34

IMPLICIT WORK ORDERS SELECTED BY AGENCIES ~36

WORK IS PERFORMED BY AGENCIES AND FINISHED; NEXT WORK ORDER IN SEQUENCE HAS STATUS CHANGED ~38

WORK RESULTS ARE SUMARIZED AND REVIEWED

~38A

## FIG. 2

KEY     ACTION

| A | B | C | X | Y | • • • | | | | |
|---|---|---|---|---|-------|---|---|---|---|
|   |   |   |   |   |       |   |   |   |   |
|   |   |   |   |   |       |   |   |   |   |
|   |   |   |   |   |       |   |   |   |   |

⇐RULE RCD 1
⇐RULE RCD 2
⇐RULE RCD 3
⇐• • •
⇐RULE RCD N

## FIG. 3

1. EXPLICIT
REQUEST
GENERATION

ORDER ENTRY
SCREEN

41

AUTOMATIC
EXPLICIT
ORDER
GENERATION
BY CORE
SOFTWARE

43

EXPLICIT
WORK ORDERS

DEFINE
PARAMETERS
FOR
READING
I45
RECORDS

2. IMPLICIT
REQUEST
GENERATION

47

I45
WORK PROTOCOL
RULES

45

ZØØE

SYSTEM
CONTROL FILE
META-PROTOCOL

49
SELECTED
WORK PROTOCOL
RULES

3. COLLISION
DETECTION AND
ELIMINATION

51

ELIMINATE ALL
DUPLICATE WORK
PROTOCOL RULES
WITHIN A SINGLE
EXPLICIT WORK ORDER

4. COMPRESSION
OF REQUESTS

53

FACTOR OUT
DUPLICATE IMPLICIT
WORK ORDERS ACROSS
ALL EXPLICIT WORK
ORDERS

5. STORAGE
OF REQUESTS

55

IØ7
STORE
WORK ORDERS

6. SEQUENCING
AND RELEASE

57

SEQUENCE
WORK ORDERS

RELEASE
WORK ORDERS

# FIG. 4

| | |
|---|---|
| DISPLAY EXPECTED RECEIPTS ▶ | I89E RECEIVING — 50 |
| ◀ FLAG ORDERS AS RECEIVED | |
| DISPLAY OPEN, UNSOURCED REQUESTS ▶ | I90E SOURCING — 51 |
| ◀ ASSIGN A SOURCE | |
| DISPLAY INVENTORY PICK REQUESTS ▶ | I91E PICKING — 52 |
| ◀ ASSIGN INVENTORY BIN AND PROD. CODE | |
| DISPLAY TRAFFIC REQUESTS ▶ | I92E TRAFFIC — 53 |
| ◀ ASSIGN A CARRIER | |
| DISPLAY INVOICE REQUESTS ▶ | I93E INVOICING — 54 |
| ◀ LOG OUTGOING INVOICES | |
| DISPLAY EXPECTED CASH RECEIPTS ▶ | I94E CASH APPLICATION — 55 |
| ◀ APPLY ACTUAL RECEIPTS | |
| DISPLAY EXPECTED SHIPMENTS ▶ | I96E SHIPPING — 56 |
| ◀ ENTER ACTUAL CARRIER AND SHIPPING DATA | |
| DISPLAY FAILED & ROUTINE CREDIT CHECKS ▶ | I97E CREDIT — 57 |
| ◀ APPROVE AND RELEASE OR CANCEL ORDER | |
| DISPLAY PURCHASING REQUESTS ▶ | I98E PURCHASING — 58 |
| ◀ SELECT VENDORS AND INDICATE PURCHASES | |
| REVIEW AND SUMMARIZE WORK ORDER DATA ▶ | I09E SUMMARY STATISTICS — 59 |

60

I07E WORK ORDERS

# FIG. 5

```
          ┌─────────────────────┐
          │   WORK ORDERS       │  ⟋70
          │    SELECTED         │
          │   FOR DISPLAY       │
          │    BASED ON         │
          │  USER CRITERIA      │
          │    (FILTER)         │
          └─────────────────────┘
                    │
                    ▼
          ┌─────────────────────┐
          │ USER SELECTS WORK   │  ⟋72
          │  ORDER HE OR SHE    │
          │ WISHES TO PROCESS   │
          └─────────────────────┘
                    │
                    ▼
          ┌─────────────────────┐
          │  USER INVOKES ANY   │  ⟋74
          │ NECESSARY VERB      │
          │ COMMANDS TO ASSIST  │
          │   IN PROCESSING     │
          └─────────────────────┘
                    │
                    ▼
          ┌─ ─ ─ ─ ─ ─ ─ ─ ─ ─ ┐
          │   USER DOES THE     │  ⟋76
          │  WORK ORDERED BY    │
          │ THE IMPLICIT WORK   │
          │      ORDER          │
          └─ ─ ─ ─ ─ ─ ─ ─ ─ ─ ┘
                    │
                    ▼
          ┌─────────────────────┐
          │ USER INVOKES "FINISH"│  ⟋78
          │      VERB           │
          └─────────────────────┘
                    │
                    ▼
          ┌─────────────────────┐
          │ SEQUENCER CHANGES   │  ⟋80
          │ STATUS OF NEXT WORK │
          │ ORDERS TO "AVAILABLE"│
          └─────────────────────┘
                    │
                    ▼
          ┌─────────────────────┐
          │ NEXT WORK ORDERS    │  ⟋82
          │ TO BE DONE DISPLAYED │
          │ ON WORKSTATIONS     │
          │ WHEN USER SELECTION │
          │ CRITERIA ENTERED    │
          └─────────────────────┘
```

FIG. 6

41

FIG. 7

FIG. 8

120

VERBS

122 SCENARIO ____ 124    RULE # ____ 126
ACTIVE Y/N ____ 128

130 ALLOCATION ____ 132
AMOUNT
G/L ACCT ____ 134    G/L TIME PERIOD ____ 136

138 FILTER ____ ____
CONDITIONS ____ ____

WEIGHING FACTOR DATA
% ALLOCATION ____ 142    WEIGHT BY ____ 144
140 MAX ALLOCATION ____ 146    MIN ALLOCATION ____ 148
DESTINATION COLUMN ____ 150

FIG. 9

_170_

| VERBS |
|---|
| 172    KEY FIELDS<br><br>——————  ——————  ——————  —————— • • • |
| ACTION FIELDS<br><br>ACTIVITY      AGENCY      PRODUCT      BRAND<br>————176   ————178   ————180   ————182<br><br>174<br><br>PRICE      REF. NO<br>————     ———— |

# FIG. 10

| VERBS |
|---|
| CREDIT TYPE   ————192<br>ORDER TYPE   ————194<br>PARENT ACTION ————188<br>SEQ#   ———— |
| CHILD ACTION   ————190 |

# FIG. 11

I07E — 200

| CUST | PROD | QTY | DATE |
|---|---|---|---|
| A | X | 100 | 5/10 |

**FIG. 12A**

202

| BREAKPOINT | LOW | HIGH |
|---|---|---|
| F | 1 | 50 |
| G | 51 | 100 |

**FIG. 12B**

Z00E — 204

| | CUST | PROD | BREAKPOINT | |
|---|---|---|---|---|
| 1 | * | BLANK | Y |
| 2 | * | * | Y |
| 3 | VMC | TYPE | N |

**FIG. 12C**

S20E

| COMMIT | START DATE | END DATE |
|---|---|---|
| 1 J | 5/1 | 5/31 |
| 2 K | 6/1 | 6/30 |
| 3 L | 5/8 | 5/15 |

**FIG. 12D**

S18E

| CUST | ATTRIB | CUST CODE |
|---|---|---|
| 1 A | VMC | FED |
| 2 B | VMC | CAL |

**FIG. 12E**

I02E

| PROD | ATTRIB | PROD CODE |
|---|---|---|
| 1 X | TYPE | LIQ |
| 2 X | HAZ | FLAM |
| 3 X | HAN | REFR |
| 4 Y | TYPE | PALLET |
| 5 Y | HAZ | NFLAM |

**FIG. 12F**

| | CUST | PROD | BRK | COMMIT | SEQ | ACTION | PROD | QTY |
|---|------|------|------|--------|-----|--------|------|-----|
| 1 | A | X | G | J | 1 | PICK | X | |
| 2 | A | X | G | K | 2 | SHIP | X | |
| 3 | A | BLANK | G | J | 1 | CREDIT | | |
| 4 | FED | LIQ | BLANK | J | 1 | REBATE | | 5% |
| 5 | B | Y | BLANK | J | 1 | PICK | Y | |

## FIG. 12G

| ACTION | PROD | QTY | • • • |
|--------|------|-----|-------|
| 1 CREDIT | | | |
| 2 PICK | X | 100 | |
| 3 REBATE | | 5% | |

## FIG. 12H